# EUROPÄISCHE PATENTSCHRIFT

(11) **EP 2 602 220 B1**
(45) Veröffentlichungstag und Bekanntmachung des Hinweises auf die Patenterteilung: **12.10.2016**
(21) Anmeldenummer: 12405123.6
(22) Anmeldetag: 30.11.2012
(51) Int. Cl.: B65H 29/00, B65H 33/16, B65H 39/00

(54) **Einrichtung und Verfahren zum Zusammenstellen von flächigen Produkten, insbesondere von Druckereiprodukten**
Device and method for the assembly of flat products, especially printed products
Dispositif et procédé d'assemblage de produits plats, en particulier de produits d'imprimerie

(30) Priorität: 07.12.2011 CH 19422011
(43) Veröffentlichungstag der Anmeldung: 12.06.2013
(73) Patentinhaber: Ferag AG, 8340 Hinwil (CH)
(72) Erfinder: Dax, Roman, 8344 Bäretswil (CH)
(74) Vertreter: Frei Patent Attorneys

(56) Entgegenhaltungen:
- EP-A2- 0 899 229
- EP-A2- 2 138 439
- EP-A2- 2 505 536
- US-A- 5 638 659
- US-A1- 2006 042 759
- US-A1- 2009 139 839
- US-A1- 2011 291 354

## Beschreibung

Die Erfindung bezieht sich auf das Gebiet der Fördertechnik und betrifft eine Einrichtung zur Herstellung von Zusammenstellungen aus Produkteinheiten, insbesondere aus Druckereiprodukten oder diese enthaltend, gemäss dem Oberbegriff des Anspruchs 1. Ferner betrifft die Erfindung ein Verfahren zum Betreiben einer Verarbeitungsanlage nach dem Oberbegriff des Anspruchs 10 .

Die EP 2 138 439 A2 beschreibt eine Einrichtung zur Herstellung von Stapeln aus flächigen Druckereiprodukten. Die Einrichtung enthält eine Stapelvorrichtung mit einem Stapelschacht umfassend einen Hauptstapelschacht sowie einem über dem Hauptstapelschacht angeordneten Vorstapelschacht. Die Stapelvorrichtung umfasst ferner eine Umlaufanordnung mit in den Vorstapelschacht ein und aus diesem ausfahrbaren Auflageeinheiten. Die Auflageeinheiten bilden eine Auflagefläche für einen im Vorstapelschacht zu bildenden Produktstapel aus. Über eine Zuführvorrichtung werden dem Vorstapelschacht die zu stapelnden Produkteinheiten zugeführt. Die Produkteinheiten bilden auf den Auflageeinheiten im Vorstapelschacht einen Vorstapel aus, während eine sich darunter befindende weitere Auflageeinheit einen vorgängig darauf gebildeten Vorstapel an den Hauptstapelschacht zur Bildung eines Hauptstapels abgibt. Die Auflageeinheiten sind in der Umlaufanordnung entlang einer geschlossenen Umlaufbahn hintereinander angeordnet bewegbar. Jede Auflageeinheit umfasst eine Paarung aus jeweils zwei nebeneinander angeordneten Auflageelementen.

Die US 5,772,391 beschreibt ebenfalls eine Einrichtung zur Herstellung von Stapeln aus flächigen Druckereiprodukten. Die Einrichtung enthält eine Stapelvorrichtung mit einem Stapelschacht. Die Stapelvorrichtung enthält im Weiteren Auflageeinheiten, welche in den Stapelschacht eingreifen und eine Auflagefläche für den zu bildenden Produktstapel ausbilden. Über eine Zuführvorrichtung werden dem Stapelschacht die zu stapelnden Produkteinheiten zugeführt. Die Produkteinheiten werden auf den in den Stapelschacht eingreifenden Auflageeinheiten zu einem Stapel zusammengeführt. Eine sich darunter befindende, weitere Auflageeinheit übergibt einen vorgängig darauf gebildeten Stapel an eine Aufnahmeeinheit im Stapelschacht. Die Stapelvorrichtung umfasst auch hier eine Umlaufanordnung, in welcher die Auflageeinheiten entlang einer geschlossenen Umlaufbahn hintereinander angeordnet in den Stapelschacht ein- und ausfahrbar sind. Jede Auflageeinheit umfasst ebenfalls eine Paarung aus jeweils zwei nebeneinander angeordneten Auflageelementen.

Einrichtungen der oben beschriebenen Art müssen heute für die Verarbeitung von Produkteinheiten mit unterschiedlichen Dimensionen, insbesondere Flächenformaten, ausgelegt sein. Insbesondere der Abstand zwischen seitlichen Begrenzungselementen sowie die Distanz zwischen den seitlichen Aussenkanten der Auflageelemente bzw. der Auflageeinheiten muss jeweils auf die Breite der Produkteinheiten ausgerichtet sein, damit Letztere während des Stapelbildungsvorganges optimal von unten abgestützt werden. D.h. die Abstützung soll über die Breite der Produkteinheiten nicht zu breit oder zu schmal ausfallen.

Eine Änderung der Dimension bzw. des Flächenformats geht jedoch oftmals einher mit einer Abschaltung der Anlage und einer manuellen Einstellung von Bauteil-Anordnungen in Verarbeitungseinrichtungen auf die geänderte Produktdimension. Aus Gründen der Produktivität soll jedoch ein Formatwechsel zwischen einzelnen Produktströmen möglichst ohne Verzögerung oder gar Unterbruch des Verarbeitungsbetriebes vonstatten gehen.

Die US 2011/0291354 A1 beschreibt ein System zum Fördern und Zusammentragen von Druckblättern unterschiedlicher Grösse zu Stapeln.

Die EP 0 899 229 A2 beschreibt eine Stapeleinrichtung zum Stapeln von Bogen, wobei die Bogen mittels Transportbändern zugeführt werden. Die Stapeleinrichtung enthält eine Vorrichtung zum Einstellen der Lage der Transportbänder an das Format der Bogen.

Es ist daher eine Aufgabe der vorliegenden Erfindung, die Vorrichtung und das dazugehörige Verfahren derart weiter zu bilden, dass eine Umstellung der BauteilAnordnung auf eine geänderte Produktdimension möglichst schnell und ohne Verzögerung des Arbeitsprozesses durchführbar ist.

Diese Aufgabe wird mit den Merkmalen des Vorrichtungsanspruchs 1 und den Merkmalen des Verfahrensanspruchs 10 gelöst.

Diese **Aufgabe** wird mit den Merkmalen des Vorrichtungsanspruchs 1.

Weitere bevorzugte Ausführungsformen und Weiterbildungen der Erfindung gehen aus den abhängigen Patentansprüchen hervor. Merkmale der Verfahrensansprüche sind in diesem Zusammenhang sinngemäss mit Merkmalen der Vorrichtungsansprüche kombinierbar und umgekehrt.

Die Erfindung betrifft also eine Einrichtung zur Herstellung von Zusammenstellungen, insbesondere Stapeln, aus Produkteinheiten, insbesondere aus oder mit Druckereiprodukten. Die Einrichtung enthält wenigstens ein Verstellmittel zur Anpassung von wenigstens einer Bauteilanordnung der Einrichtung an die veränderte Dimension von nacheinander der Einrichtung zugeführten Produkteinheiten. Die Bauteilanordnung dient dabei insbesondere der Ausrichtung der Produkteinheiten in der Einrichtung. Dies geschieht vorzugsweise bei fortgeführtem und insbesondere bei einem lückenlosen Förderbetrieb.

Unter Zusammenstellungen von Produkteinheiten sind eine Mehrzahl von Produkteinheiten zu verstehen, welche geordnet und senkrecht oder schräg nebeneinander und/oder horizontal oder geneigt liegend übereinander zu einer Gruppe oder einem Los zusammengefasst sind. Bei einer horizontal oder geneigt liegenden Zusammenstellung von Produkteinheiten spricht man auch von Stapel.

Lückenlos bedeutet, dass zwischen zwei aufeinanderfolgenden Strömen von Produkteinheiten mit unterschiedlichen Produkteigenschaften keine Produktlücke zum Zwecke der Formatumstellung vorgesehen ist, welche grösser ist als die Abstände zwischen den Produkten in den Produktströmen. Bei einem getakteten Produktstrom wird eine Lücke beispielsweise dadurch ausgebildet, in dem ein oder mehrere aufeinanderfolgende Fördertakte keine Produkteinheiten enthalten.

So kann die Einrichtung zum Zusammenstellen von Produkteinheiten gemäss einer Weiterbildung der Erfindung eine Zusammentrageinrichtung zum Zusammentragen bzw. Stapeln von Produkteinheiten, insbesondere von einzelnen Druckereiprodukten, zu Kollektionen oder Sammlungen sein.

Die Zusammentrageinrichtung zeichnet sich durch ein Fördermittel mit einer Mehrzahl von hintereinander entlang einer, insbesondere geschlossenen Förderbahn verfahrbaren Förderabteilen aus.

Den Förderabteilen werden zwecks Erstellung der Zusammenstellungen über Zuführeinheiten Produkteinheiten zugeführt. Die Förderabteile weisen hierzu eine Auflagefläche auf, auf welcher die von den Zuführeinheiten zugeführten Produkteinheiten abgelegt und zu einer Kollektion zusammengestellt werden. Ist die Auflagefläche horizontal oder geneigt, z. B. geneigt bis zu einem Winkel von 45° (Winkelgrade), so entspricht die Zusammenstellung z. B. einem Stapel. Die Förderabteile bilden in diesem Fall jeweils einen Stapelbereich aus.

Der Zusammentrageinrichtung kann im Weiteren ein Verstellmittel in Form einer Seitenrichteinheit mit beidseitig von den Förderabteilen angeordneten Seitenrichtmittel zum seitlichen Ausrichten der auf den Förderabteilen abgelegten Produkte zugeordnet sein.

Gemäss einer anderen Weiterbildung der Erfindung betrifft die Einrichtung die Herstellung von Stapeln aus Produkteinheiten. Die Einrichtung enthält hierzu eine Stapelvorrichtung mit wenigstens einer Auflageeinheit, welche eine Auflagefläche für die zu bildenden Stapel ausbildet. Die Stapelvorrichtung enthält hierzu eine Umlaufanordnung, in welcher die wenigstens eine Auflageeinheit entlang einer geschlossenen Umlaufbahn von oben in einen Stapelbereich einfahrbar, insbesondere einschwenkbar, und in einem unteren Bereich wieder aus dem Stapelbereich ausfahrbar, insbesondere heraus schwenkbar ist.

Die Auflageeinheit umfasst bevorzugt wenigstens ein, und insbesondere genau zwei, nebeneinander angeordnete Auflageelemente. Das oder die Auflageelemente können z. B. in Form von Panelen oder Zinken ausgebildet sein.

Die Einrichtung umfasst jedoch bevorzugt eine Mehrzahl der beschriebenen Auflageeinheiten, welche in der Umlaufanordnung entlang einer geschlossenen Umlaufbahn hintereinander angeordnet und, wie oben beschrieben, in einen Stapelbereich ein- und aus einem Stapelbereich ausfahrbar sind.

Gemäss einer ersten bevorzugten Variante der genannten Weiterbildung enthält die Stapelvorrichtung eine Seitenbegrenzungseinrichtung mit einem ersten und zweiten seitlichen Stapelbegrenzungselement sowie Verstellmittel zur Einstellung des Abstandes zwischen den seitlichen Stapelbegrenzungselementen, insbesondere bei fortgeführtem Förderbetrieb.

Die genannten Verstellmittel umfassen z. B. ein Schraubgetriebe, mit wenigstens einer durch ein Antriebsmittel, wie Antriebsmotor, angetriebenen Gewindespindel, welche in ein mit einem seitlichen Stapelbegrenzungselement verbundenen Gegengewindekörper eingreift. Der Antriebsmotor, welcher bevorzugt ein Elektromotor ist, kann die Gewindespindel direkt oder indirekt über ein Getriebe antreiben.

Gemäss einer besonderen Ausführungsform des oben genannten Schraubgetriebes umfasst das genannte Verstellmittel eine angetriebene Gewindespindel mit zwei gegenläufigen Gewindeabschnitten. An den beiden Gewindeabschnitten ist jeweils ein Gegengewindekörper angeordnet, wobei ein erster Gegengewindekörper mit dem ersten Stapelbegrenzungselement und ein zweiter Gegengewindekörper mit dem zweiten Stapelbegrenzungselement verbunden ist.

Gemäss einer zweiten bevorzugten Variante der genannten Weiterbildung enthält die Stapelvorrichtung alternativ oder zusätzlich zur ersten Variante (weitere) Verstellmittel zur Einstellung der Distanz zwischen den seitlichen Aussenkanten der Auflageeinheiten, insbesondere bei fortgeführtem Förderbetrieb.

Umfasst die Auflageeinheit zwei nebeneinander oder überlappend angeordnete Auflageelemente, so kann mit den Verstellmitteln die Distanz zwischen den seitlichen Aussenkanten der Auflageelemente verstellt werden, indem die Auflageelemente durch die Verstellmittel relativ zueinander lateral bewegt werden. Hierzu kann nur eines oder können alle Auflageelemente lateral bewegt werden.

Eine Produkteinheit besteht vorzugsweise aus einem einzelnen Produkt oder aus mehreren geschichteten, insbesondere gestapelten, oder ineinander gesteckten Produkten, insbesondere flächigen Produkten. Die flächigen Produkte einer Produkteinheit können identische oder unterschiedliche Dimensionen, insbesondere Flächenformate aufweisen. Das Flächenformat bezieht sich auf die zweidimensionale Ausdehnung der Produkteinheit, welche z. B. als Länge und Breite bzw. Tiefe oder in Form eines Durchmessers angegeben wird. Die Dimension bezieht sich auf das Flächenformat und die Dicke bzw. Höhe der Produkteinheit.

Die Produkte oder einzelne Produkte einer Produkteinheit sind bevorzugt Druckereierzeugnisse. Die Produkteinheit als solche ist bevorzugt ebenfalls flächig ausgebildet. Das oder die Produkte einer Produkteinheit können überdies teilweise oder vollständig von einer Verpackungshülle umgeben sein.

Eine Produkteinheit kann insbesondere eine Kollektion aus verschiedenen Produkten unterschiedlicher Dimension bzw. unterschiedlichen Formates sein, wobei die Dimension der Kollektion durch eine maximale Breite, eine maximale Tiefe und eine maximale Höhe definiert ist. Die Dimension der Kollektion lässt sich z. B. aus den Dimensionen der einzelnen Produkte errechnen und/oder durch Messen der Dimension der Kollektion ermitteln.

Der Stapelbereich der Stapelvorrichtung wird bevorzugt durch einen Stapelschacht ausgebildet, wobei die Auflageeinheiten, wie erwähnt, in den Stapelschacht ein- und ausfahrbar sind. Der Stapelschacht definiert einen im Wesentlichen vertikal verlaufenden Stapelraum, in welchem die Produkteinheiten in Schwerkraftrichtung zu Stapeln zusammengetragen werden. Der Stapelschacht kann durch seitlich angeordnete Einrichtungselemente, wie Wandelemente, Anschlagleisten, etc. teilweise oder vollständig physisch eingegrenzt sein. Die seitlichen Stapelbegrenzungselemente der Seitenbegrenzungseinrichtung bilden bevorzugt eine seitliche Begrenzung des Stapelschachtes aus.

Ferner enthält die Einrichtung eine unterhalb des Stapelschachtes angeordnete Stapelauflage, welche den Stapelschacht nach unten abschliesst, und welchem die auf den Auflageeinheiten gebildeten Produktstapel durch hinausfahren der Auflageeinheiten aus dem Stapelschacht zur weiteren Verarbeitung übergeben werden.

Gemäss einer bevorzugten Weiterbildung der Erfindung umfasst der Stapelschacht einen Hauptstapelschacht zur Ausbildung eines Hauptstapels sowie einen oberhalb des Hauptstapelschachts angeordneten Vorstapelschacht zur Ausbildung eines Vorstapels bzw. Teil- oder Zwischenstapels. Die Auflageeinheiten sind gemäss dieser Weiterbildung in den Vorstapelschacht ein- und ausfahrbar.

Die Einrichtung enthält im Weiteren bevorzugt eine Zuführvorrichtung zum Zuführen von zu stapelnden Produkteinheiten in einen Stapelbereich, insbesondere in den Stapelschacht bzw. den Vorstapelschacht. Die Zuführvorrichtung kann z. B. ein Förderband umfassend, auf welchem die Produkteinheiten vereinzelt oder in einem Schuppenstrom dem Stapelschacht zugeführt werden.

Gemäss einer bevorzugten Umsetzung des Erfindungsgedankens stehen wenigstens ein Auflageelement und vorzugsweise zwei bzw. sämtliche Auflageelemente einer Auflageeinheit entlang ihrer Umlaufbahn mit jeweils einem quer zur Umlaufbahn auf das Auflageelement einwirkenden Positionierungsmittel in Wirkverbindung, derart dass die laterale Position des Auflageelementes über das Positionierungsmittel einstellbar ist. Die Position des betreffenden Positionierungsmittels ist hierzu quer zur Umlaufbahn der Auflageeinheiten über entsprechende Verstellmittel verstellbar.

Das Auflageelement und das diesem zugeordnete Positionierungsmittel stehen hierzu zweckmässig in einer mechanischen Wirkverbindung. Lateral bedeutet hier quer, insbesondere senkrecht zu einer, durch die Bewegungsrichtung der Auflageelemente entlang ihrer Umlaufbahn aufgespannten Bewegungsebene.

In einer bevorzugten Ausführungsform umfasst das Positionierungsmittel ein in Bewegungsrichtung des Auflageelementes umlaufendes Führungsorgan, welches als seitliches Begrenzungsmittel für ein an der Auflageeinheit angeordnetes und mit dem Auflageelement kooperierendes Führungselement wirkt. Die Auflageeinheiten laufen bevorzugt aussenseitig entlang des Führungsorgans. Das Führungsorgan bildet bevorzugt eine umlaufende Berührungskante, -fläche oder -linie aus, welche mit dem Führungselement in Wirkverbindung steht. Das Führungselement kann z. B. als Führungslasche ausgebildet sein.

Das Positionierungsmittel umfasst bevorzugt zwei parallel zueinander verlaufende und miteinander gekoppelte Führungsorgane, wobei das Führungselement zwischen den beiden Führungsorganen angeordnet ist. Die beiden Führungsorgane bilden also eine beidseitig laterale Begrenzung für das Führungselement aus.

Beim Verschieben der beiden Führungsorgane in eine erste laterale Richtung tritt ein erstes Führungsorgan zwecks Verschiebung des Auflageelementes in die erste laterale Richtung mit dem Führungselement in mechanischen Kontakt. Beim Verschieben der beiden Führungsorgane in eine zweite, der ersten Richtung entgegen gesetzte laterale Richtung tritt das zweite Führungsorgan zwecks Verschiebung des Auflageelementes in die zweite laterale Richtung mit dem Führungselement in mechanischen Kontakt.

In einer bevorzugten Weiterentwicklung der Erfindung sind wenigstens ein Auflageelement, vorzugsweise sämtliche Auflageelemente einer Auflageeinheit über entsprechende Halterungen auf einem Querführungselement angeordnet bzw. befestigt. Die Auflageelemente sind hierbei gegenüber dem Querführungselement lateral verschiebbar, jedoch vorzugsweise verdrehsicher angeordnet. Das wenigstens eine Auflageelement ist nun über das diesem zugeordnete Positionierungsmittel entlang des Querführungselementes lateral verschiebbar.

Die Auflageelemente einer Auflageeinheit können nebeneinander auf einem gemeinsamen Querführungselement oder auf separaten, z. B. parallel zueinander verlaufenden Querführungselementen angeordnet sein. Das Querführungselement ist bevorzugt ein Längsprofil auf welchem das Auflageelement verschiebbar gehalten ist. Die Halterung weist gemäss einer möglichen Ausführungsform einen Durchbruch auf, durch welchen das Längsprofil geführt und lateral verschiebbar angeordnet bzw. gehalten ist. Der Querschnitt des Längsprofils kann im Verbindungsabschnitt mit der Querschnittskontur des Durchbruchs korrespondieren.

Das Längsprofil kann zum Beispiel ein Rundprofil sein. Der Profilquerschnitt ist jedoch zumindest im Verbindungsabschnitt zwecks Herstellung einer Verdrehsicherung bevorzugt nicht kreisförmig ausgebildet. Das Längsprofil kann z. B. abschnittsweise oder durchgehend als Vielkeilprofil ausgebildet sein.

Die Verstellmittel zum Verstellen der Position der Positionierungsmittel umfassen bevorzugt ein Schraubgetriebe, mit einer durch ein Antriebsmittel angetriebenen Gewindespindel, welche in ein mit dem Positionierungsmittel verbundenen Gegengewindekörper eingreift. Hierdurch wird eine durch das Antriebsorgan in die Gewindespindel eingetragene Drehbewegung in eine relative Verschiebebewegung des Gegengewindekörpers gegenüber der Gewindespindel umgesetzt. Das Schraubgetriebe wandelt also eine drehende Bewegung in eine translatorische Bewegung um.

Die Gewindespindel ist drehbar jedoch bevorzugt ortsfest gelagert. Das Antriebsorgan ist bevorzugt ein Elektromotor. Der Antrieb kann direkt oder über ein Getriebe mit z. B. Antriebsriemen erfolgen.

In einer bevorzugten Ausführungsform der Erfindung umfassen die Auflageeinheiten jeweils zwei Auflageelemente. Die Umlaufanordnung enthält zwei nebeneinander angeordnete Positionierungsmittel, welche jeweils mit einem der Auflageelemente zur lateralen Verschiebung desselbigen zusammenwirken. Die Verstellmittel umfassen auch hier ein Schraubgetriebe mit einer durch ein Antriebsmittel angetriebenen Gewindespindel.

Die Gewindespindel weist nun entlang ihrer Längsachse zwei gegenläufige Gewindeabschnitte auf. Ein erster Gewindeabschnitt greift in einen mit dem ersten Positionierungsmittel verbundenen ersten Gegengewindekörper ein. Ein zweiter Gewindeabschnitt greift in ein mit dem zweiten Positionierungsmittel verbundenen zweiten Gegengewindekörper ein. Die Positionierungsmittel bewegen sich nun bei einer Spindeldrehung gegenläufig aufeinander zu oder voneinander weg. Auf diese Weise lassen sich über eine gemeinsame Gewindespindel beide Positionierungsmittel und somit beide Auflageelemente gegenläufig zueinander lateral verschieben.

Die Auflageeinheiten können in bekannter Arte und Weise über Fördermittel insbesondere flexible Fördermittel, wie Ketten oder Zahnriemen, z. B. schlupffrei angetrieben und entlang ihrer Umlaufbahn bewegt werden. Die Fördermittel können auch schienengeführte Wagen umfassen, an welchen je eine Auflageeinheit angeordnet, wobei diese Wagen mit bekannten Antriebsorganen, wie Führungsschienen, in Umlaufrichtung bewegt werden. Die Auflageeinheiten sind hierzu über entsprechende Befestigungsmittel an den Fördermitteln befestigt. Die Befestigungsmittel können die Auflageeinheiten z. B. über die Querverbindungselemente mit den Fördermitteln verbinden. Die Fördermittel werden z. B. endlos um Umlenkmittel, wie Umlenkrollen, Umlenkwalzen oder Zahnräder, geführt. Die Umlenkmittel können überdies als Antriebsmittel ausgebildet sein. So können die Fördermittel z. B. über Antriebszahnräder bzw. Antriebwalzen angetrieben sein.

Die Querverbindungselemente weisen beidseitig an ihren seitlichen Endabschnitten bevorzugt Führungsorgane, wie Steuerrollen, auf, welche mit einer Kulissenführung an der Umlaufanordnung zusammenwirken und über welche die Auflageeinheiten entlang ihrer Umlaufbahn geführt sind.

Ferner können die Querverbindungselemente beidseitig an ihren seitlichen Endabschnitten weitere Führungsorgane, wie an einem Schwenkhebel befestigte Steuerrollen, aufweisen, welche mit einer weiteren Kulissenführung an der Umlaufanordnung zur Steuerung der Schwenkposition der Auflageelemente entlang ihrer Umlaufbahn zusammenwirken. Die Kulissenführungen können Führungsflächen für die Steuerrollen ausbilden.

Die Umlaufanordnung umfasst bevorzugt eine Tragstruktur, insbesondere ein Maschinengestell, an welcher die Vorrichtungskomponenten direkt oder indirekt befestigt sind. Die genannten Kulissenführungen sind z. B. bevorzugt an seitlichen Bauteilen der Tragstruktur, wie z. B. Seitenschildern, vorgesehen. Die Umlenkmittel der Fördermittel die Positionierungsmittel, die dazugehörigen Verstellmittel sind ferner bevorzugt direkt oder indirekt mit der Tragstruktur verbunden. Die Umlenkmittel sind bevorzugt über Querachsen mit den genannten seitlichen Bauteilen der Tragstruktur verbunden.

Da gemäss einer besonderen Ausführungsform jeweils zwei unmittelbar hintereinander folgende Auflageeinheiten zumindest über bestimmte Teilabschnitte der Umlaufbahn mit unterschiedlichen Geschwindigkeiten angetrieben werden müssen, sollen unmittelbar aufeinander folgende Auflageeinheiten unabhängig voneinander angetrieben werden. Dies geschieht, indem die beiden Auflageeinheiten über verschiedene Fördermittel, wie nebeneinander angeordneten Antriebsriemen oder Antriebsketten angetrieben werden.

Der Einrichtung kann, als Teil einer nachfolgend beschriebenen Verarbeitungsanlage, im übrigen eine Bindevorrichtung nachgeordnet sein, in welcher die Hauptstapel zu Paketen bzw. Losen gebunden werden. Ferner kann der Einrichtung eine Wegfördereinrichtung zugeordnet sein, in welcher die Stapel bzw. Pakete von der Einrichtung bzw. der Bindevorrichtung weggefördert werden. Die Wegfördereinrichtung kann z. B. einen Plattenförderer oder Gliederbandförderer umfassen.

Die Erfindung betrifft ferner eine Verarbeitungsanlage zur Verarbeitung von Produkteinheiten mit unterschiedlichen Produkteigenschaften. Diese enthält wenigstens eine Verarbeitungseinrichtung sowie Fördermittel zum Fördern der Produkteinheiten in der Verarbeitungsanlage. Die Fördermittel sind bevorzugt zwischen zwei Verarbeitungseinrichtungen angeordnet.

Ferner enthält die Verarbeitungsanlage eine Steuerungseinrichtung zur Steuerung der wenigstens einen Verarbeitungseinrichtung sowie Verstellmittel zur Anpassung von wenigstens einer Einflussgrösse zur Beeinflussung der Produkteinheiten oder Teile davon an der wenigstens einen Verarbeitungseinrichtung an die unterschiedlichen Produkteigenschaften.

Bei der Einflussgrösse zur Beeinflussung der Produkteinheiten oder Teile davon handelt es sich bevorzugt um die Geometrie einer Bauteilanordnung in der Verarbeitungseinrichtung.

Eine solche Geometrie und die dazugehörige Bauteilanordnung können zum Beispiel Seitenleitelemente und ihre Position relativ zu einem Förderorgan oder den Produkteinheiten, ein Schweissbalken und seine Position relativ zu einem Förderorgan oder den Produkteinheiten, Zuführmittel für eine Verpackungsfolie und ihre Position relativ zu einem Förderorgan oder Richtelemente zum Ausrichten von Produkteinheiten und ihre Position relativ zueinander oder zu den Produkteinheiten sein.

Die Umstellung bzw. Verstellung der Geometrie einer Bauteilanordnung kann z. B. die Änderung der Position eines Bauteils relativ zu einem anderen Bauteil sein. Die Position kann z. B. durch eine Distanz, einen Winkel oder eine Neigung, definiert sein.

Die Umstellung der Einflussgrösse bzw. der Geometrie einer Bauteilanordnung kann auch den Austausch oder die In- bzw. Ausserbetriebnahme bzw. Zuschalten oder Wegschalten von funktionswirksamen Bauteilen, Modulen, Baugruppen, Einrichtungen oder Stationen bedeuten. So kann dies z. B. das Zu- oder Wegschalten einer Zuführstation betreffen.

Die Anpassung einer Einflussgrösse kann auch eine Veränderung der Wirkung eines Bauteils, insbesondere eines Werkzeuges, auf die Produkteinheiten bedeuten. So können z. B. Schweissparameter, wie Schweisstemperatur und Schweissdauer, zum Verschweissen einer verpackten Produkteinheit von den Produkteigenschaften abhängig sein.

Im weiteren können Grössen wie die Stärke eines elektrischen Feldes, die Geschwindigkeit mit welcher ein Werkzeug, z. B. ein Schweissbalken, bewegt wird, die Temperatur zur Bearbeitung/Behandlung eines Produktes, eine Vorspannkraft, z. B. der Verpackungsfolie, die Stärke von Druckluft, die Stärke von Blasluft, ein Unter- oder Überdruck Einflussgrössen sein, welche von Produkteigenschaften abhängig sind.

Ferner kann auch die Auswahl des einzusetzenden Verpackungsmaterials mit unterschiedlichen Eigenschaften, z. B. Verpackungsmaterial unterschiedlicher Dicke bzw. Reissfestigkeit, in Abhängigkeit der Produkteigenschaften, wie Grösse und Gewicht der Produkteinheit, eine solche Einflussgrösse sein.

Im weiteren können die Einflussgrössen auch Parameter zur Einstellung von Sensoren zwecks Anpassung an geänderte Eigenschaften der Produkteinheiten oder Teilen davon umfassen.

Die Änderungen der Länge, Breite und/oder Höhe, d.h. insbesondere der Dimension der Produkteinheiten, bzw. von Teilen davon, bei einem Formatwechsel, beträgt zur vorteilhaften Umsetzung des erfindungsgemässen Verfahrens vorzugsweise bis maximal 20%, insbesondere bis maximal 10% des korrespondierenden Ausgangswertes.

Die Verarbeitungsanlage zeichnet sich nun dadurch aus, dass die Verstellmittel zur Anpassung der wenigstens einen Einflussgrösse an geänderte Produkteigenschaften einer nachfolgenden Produkteinheit bei fortgeführtem Förderbetrieb ausgelegt sind.

Die Verstellmittel sind dabei über die Steuerungseinrichtung derart steuerbar, dass die Anpassung der wenigstens einen Einflussgrösse in einem Zeitraum von unmittelbar vor, während oder unmittelbar nach dem Durchlaufen einer letzten Produkteinheit mit ersten Produkteigenschaften und unmittelbar vor, während oder unmittelbar nach dem Durchlaufen einer nachfolgend ersten Produkteinheit mit zweiten Produkteigenschaften durch die Verarbeitungseinrichtung erfolgt.

Die wenigstens eine Verarbeitungseinrichtung ist bevorzugt eine oben beschriebene Einrichtung, insbesondere Stapelbildungseinrichtung.

Die Erfindung betrifft ferner auch ein Verfahren zum Betreiben einer Verarbeitungsanlage, insbesondere einer Verarbeitungsanlage mit einer oben beschriebenen Einrichtung, wie Stapelbildungseinrichtung, in welcher Produkteinheiten mit unterschiedlichen Produkteigenschaften verarbeitet werden.

Das Verfahren zeichnet sich dadurch aus, dass die Anpassung der wenigstens einen Einflussgrösse an geänderte Produkteigenschaften einer nachfolgenden Produkteinheit über die Verstellmittel bei fortgeführtem Förderbetrieb geschieht, und wobei die Verstellmittel über die Steuerungseinrichtung derart gesteuert werden, dass die Anpassung der wenigstens einen Einflussgrösse in einem Zeitraum von unmittelbar vor, während oder unmittelbar nach dem Durchlaufen einer letzten Produkteinheit mit ersten Produkteigenschaften und unmittelbar vor, während oder unmittelbar nach dem Durchlaufen einer nachfolgend ersten Produkteinheit mit zweiten Produkteigenschaften durch die Verarbeitungseinrichtung erfolgt.

Die Produkteigenschaften umfassen z. B. die Dimension, insbesondere das Flächenformat, der Produkteinheiten bzw. von Teilen davon.

Zwecks Umstellung der Produkteigenschaften in der wenigstens einen Verarbeitungseinrichtung kann zwischen dem letzten Produkt eines vorangehenden Produktstroms mit ersten Produkteigenschaften, welcher z. B. einem ersten Produktlos entspricht, und dem ersten Produkt eines nachfolgenden Produktstroms mit zweiten Produkteigenschaften, welcher z. B. einem zweiten Produktlos entspricht, eine Produktlücke ausgebildet werden.

Die Umstellung der Verarbeitungseinrichtung von der ersten auf die zweiten Produkteigenschaften geschieht dabei während dem Durchlauf der Lücke durch die Verarbeitungseinrichtung. Die beiden Produktströme können jedoch auch lückenlos aufeinander folgen. In allgemeinen Worten ausgedrückt kann die erste Produkteinheit eines nachfolgenden Produktstroms im Vergleich mit dem Produktabstand innerhalb des nachfolgenden und/oder vorausgehenden Produktstroms denselben Abstand oder einen abweichenden bzw. grösseren Abstand zu einer voraus laufenden, letzten Produkteinheit eines vorangehenden Produktstroms mit anderen Produkteigenschaften ausbilden.

Die Fördergeschwindigkeit in der Verarbeitungsanlage kann während der Umstellung der wenigstens einen Einflussgrösse auf die geänderten Produkteigenschaften gegenüber der Sollgeschwindigkeit vor und nach der Umstellung verändert, insbesondere reduziert wird. Die Fördergeschwindigkeit kann jedoch während der Umstellung auch beibehalten werden.

Wie erwähnt, ist die wenigstens eine Verarbeitungseinrichtung bevorzugt eine Stapelbildungseinrichtung, wobei die Anpassung der wenigstens einen Einflussgrösse an geänderte Produkteigenschaften das Einstellen des Abstandes zwischen zwei seitlichen Stapelbegrenzungselementen und/oder der Distanz zwischen den seitlichen Aussenkanten wenigstens einer Auflageeinheit der Stapelvorrichtung mittels den Verstellmitteln betrifft. In diesem Fall werden bei einem Wechsel des Flächenformates, insbesondere der Breite, der zu stapelnden Produkteinheiten über die Steuerungseinrichtung die Distanz zwischen den seitlichen Aussenkanten der wenigstens einen Auflageeinheit verändert und an das geänderte Flächenformat der nachfolgenden Produkteinheiten angepasst. Je breiter die Produkteinheiten sind, desto weiter sind die Stapelbegrenzungselemente bzw. die seitlichen Aussenkanten voneinander beabstandet. Hierzu wird über die Steuerungseinrichtung das Antriebsorgan der Verstellmittel, insbesondere des jeweiligen Schraubgetriebes, angesteuert.

Die Steuerung der wenigstens einen Verarbeitungseinrichtung kann zentral über eine zentrale Steuerungseinrichtung, auch zentrale Anlagensteuerung genannt, oder lokal durch die lokale Steuerungseinrichtung der betreffenden Verarbeitungseinrichtung geschehen.

Gemäss einer Weiterbildung der Verarbeitungsanlage werden die Produkte bzw. Produkteinheiten wenigstens bereichsweise getaktet durch die Verarbeitungsanlage gefördert. Dieser Takt wird durch eine zentrale Steuerungseinrichtung vorgegeben. Der Produktstrom ist folglich wenigstens bereichsweise taktüberwacht.

Gemäss dieser Weiterbildung kann die zentrale Anlagensteuerung jedem einzelnen Fördertakt und demzufolge dem diesem Fördertakt zugeordneten Förderorgan sowie der mit dem Förderorgan geförderten Produkteinheit bzw. Produkt ein Datenpaket zuordnen. Dieses Datenpaket wird ebenfalls getaktet durch die Verarbeitungsanlage zu einer Steuerungseinheit der wenigstens einen Verarbeitungseinrichtung geführt.

Das Datenpaket enthält auf Produkteigenschaften basierende Steuerdaten bzw. Informationen, aus welchen sich Steuerdaten für die lokale Steuerungseinheit ableiten lassen. Die lokale Steuerungseinheit verwendet die Steuerdaten bzw. Informationen des Datenpakets zur Umstellung einer Bauteilanordnung auf die geänderten Produkteigenschaften.

Das Datenpaket ist also einem bestimmten Takt fest zugeordnet und wird vorzugsweise auch taktweise weitergegeben. Hierzu wird in der Anlagensteuerung bevorzugt ein digitales Taktabbild der Verarbeitungsanlage erstellt. Jedem Takt dieses Taktabbildes ist nun ein Datenpaket mit unter anderem den Eigenschaften der mit diesem Takt geförderten Produkteinheiten zugeordnet.

Das Datenpaket umfasst beispielsweise die Information, ob der Takt überhaupt ein Produkt mitführt, sowie Informationen über die Produkteigenschaften der einzelnen Produkte einer Produkteinheit oder der Produkteinheit selbst. Dies kann z. B. die Dimension (Länge, Breite, Höhe) bzw. das Format, die Form, das Gewicht, die Materialbeschaffenheit, die Oberflächeneigenschaften, die Oberflächentextur, die Steifigkeit, die Qualität, der Produktzustand, allfällige Beschädigungen, die Anzahl Produkte in der Produkteinheit oder die Adresse, an welche die Produkteinheit ausgeliefert werden soll, sein.

Das Datenpaket bewegt sich zusammen mit der Produkteinheit bzw. mit dem dazugehörigen Takt durch die Verarbeitungsanlage und passiert, wie die Produkteinheiten bzw. Produkte auch, die verschiedenen Verarbeitungseinrichtungen.

Das Datenpaket wird z. B. zeitgleich mit dem Takt durch die Verarbeitungsanlage geführt. Das Datenpaket kann jedoch dem physischen Fördertakt auch voraus laufen, so dass die betreffende Verarbeitungseinrichtung steuerungsrelevante Informationen zu einem Produkt bzw. Produkteinheit vor Eintreffen desselbigen erhält. Auf diese Weise kann die entsprechende Einstellung von Eigenschaftsgrössen der Verarbeitungseinrichtung, insbesondere einer Bauteilanordnung, auf die Produkteigenschaften der nachfolgenden Produkten oder Produkteinheiten mit geänderten Produkteigenschaften vorgenommen werden, bevor diese in der Verarbeitungseinrichtung bzw. an der betreffenden Stelle in der Verarbeitungseinrichtung eintreffen.

Die Informationen, wie z. B. Angaben über die Dimension der Produkte bzw. Produkteinheiten, welche Basis für die Generierung von Steuersignalen zwecks Anpassung der Einfussgrösse sind, können z. B. durch Sensoreneinrichtungen ermittelt werden, welche in der Verarbeitungsanlage entlang der Förderstrecke angeordnet sind. Die Sensoreinrichtungen können nach einem opto-elektrischen Verfahren photooptischen Verfahren arbeiten Die Informationen können jedoch auch aus einem Datenspeicher abgerufen bzw. von aussen in die Steuerungseinrichtung eingespiesen werden.

In diesem Zusammenhang wird auch auf die anhängige internationale Anmeldung PCT/CH 2011/000232 verwiesen, welche das oben beschriebene Steuerungskonzept ebenfalls ausführlich beschreibt, und dessen diesbezüglicher Inhalt als Teil der Offenbarung zu betrachten ist.

Zur Ausführung des erfindungsgemässen Verfahrens werden z. B. der zentralen Steuerungseinrichtung vor der Umstellung Informationen über die Produkteigenschaften, insbesondere die Dimensionen bzw. Flächenformate, der zu verarbeitenden Produkteinheiten bzw. deren Produkte, übermittelt.

Die Steuerungseinrichtung generiert basierend auf den übermittelten Produkteigenschaften Steuerdaten bzw. Informationen, welche an die wenigstens eine Verarbeitungseinrichtung, insbesondere an eine lokale Steuerungseinrichtung der Verarbeitungseinrichtung zwecks Umstellung auf die geänderten Produkteigenschaften übermittelt werden. Die Steuerdaten bzw. Informationen entsprechen vorzugsweise den Führungsgrössen für die Verstellmittel oder den Ausgangsgrössen, wie z.B. den Eigenschaftsgrössen der Produkteinheiten oder der Produkte, zur Berechnung der Führungsgrössen.

Die erfindungsgemässe Stapelbildungseinrichtung bzw. die Verarbeitungsanlage, welche eine erfindungsgemässe Stapelbildungseinrichtung enthalten kann, weisen den Vorteil auf, dass die Einflussgrösse an den Verarbeitungseinrichtungen, welche zum Beispiel durch einstellbare Maschinenteile, wie Auflage- oder Seitenführungselemente, verkörpert sein können, die mit den Produkteinheiten oder deren Produkte in Wechselwirkung stehen, während des Betriebes über die Steuerungseinrichtung auf die geänderten Eigenschaften, insbesondere Dimensionen bzw. Flächenformate, nachfolgender Produkteinheiten bzw. deren Produkte angepasst werden können. Der Betrieb der Verarbeitungsanlage braucht hierzu nicht mehr unterbrochen zu werden. Die Verarbeitungseinrichtungen und die dazugehörigen Fördermittel laufen vielmehr weiter, auch wenn während einer Umstellphase möglicherweise die Verarbeitungsgeschwindigkeit der Anlage gesenkt wird und/oder eine Produktlücke durch die Verarbeitungseinrichtungen geführt wird.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1a:: eine Seitenansicht einer erfindungsgemässen Stapelbildungseinrichtung;
- Figur 1b:: eine perspektivische Ansicht einer Produkteinheit;
- Figur 1c:: eine Draufsicht der Stapelbildungseinrichtung im Bereich der Stapelbildung gemäss Figur 1a;
- Figur 2 bis 3:: perspektivische Ansichten einer Umlaufanordnung;
- Figur 4 bis 5:: Darstellungen von vergrösserten Ausschnitten aus den Figuren 2 und 3;
- Figur 6:: eine Draufsicht einer ersten Ausführungsform einer erfindungsgemässen Verarbeitungsanlage;
- Figur 7:: eine Draufsicht einer zweiten Ausführungsform einer erfindungsgemässen Verarbeitungsanlage;
- Figur 8:: eine Draufsicht einer dritten Ausführungsform einer erfindungsgemässen Verarbeitungsanlage.

Grundsätzlich sind in den Figuren gleiche Teile mit gleichen Bezugszeichen versehen.

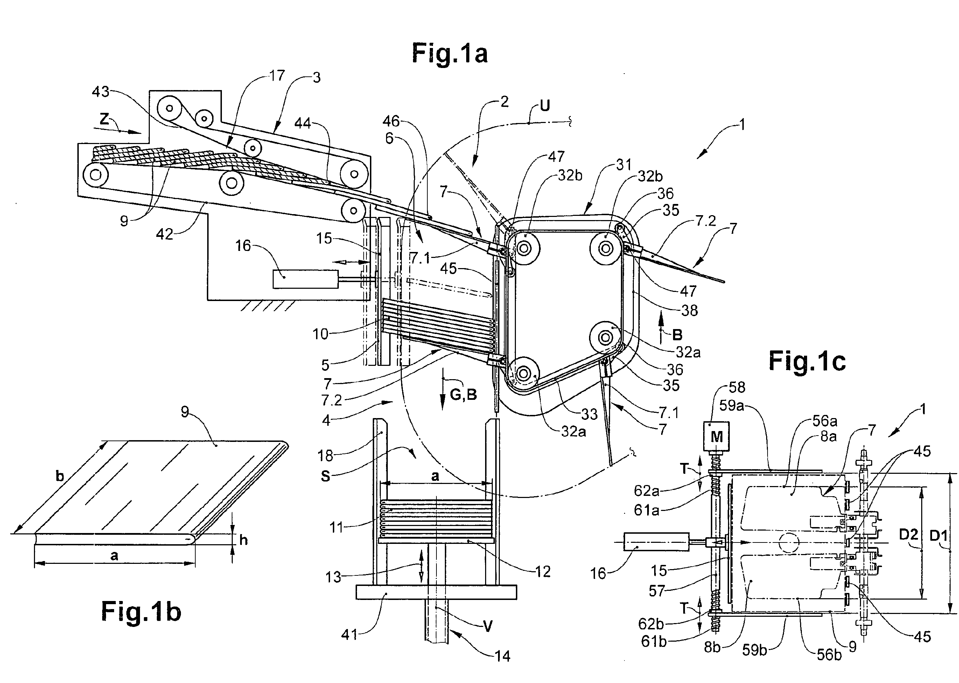

Die Figur 1a zeigt eine erfindungsgemässe Stapelbildungseinrichtung 1, welche einer Weiterentwicklung der in der EP 2 138 439 A2 offenbarten Stapelbildungseinrichtung entspricht. Die Stapelbildungseinrichtung 1 gemäss Figur 1a weist eine Stapelvorrichtung 2 mit einem Stapelschacht 4 auf, welcher sich aus einem Vorstapelschacht 6 und einem Hauptstapelschacht 5 sowie einer Umlaufanordnung 31 zusammensetzt.

Der Hauptstapelschacht 5 ist zu allen vier Seiten hin durch Stapelführungsmittel 18, hier als Eckprofile ausgebildet, und gegen unten durch eine heb- und absenkbare Stapelauflage 12, hier als Stapeltisch ausgebildet, begrenzt ist. Die Stapelauflage 12 ist um eine Vertikalachse V jeweils um 180° (Winkelgrade) drehbar, um Zwischen- bzw. Vorstapel 10 jeweils um 180° gegeneinander versetzt aufnehmen zu können. Ist im Hauptstapelschacht 5 ein aus mindestens einem Vorstapel 10, vorzugsweise jedoch aus mehreren Vorstapeln 10 bestehender Hauptstapel 11, auch Fertigstapel genannt, gebildet, wird der die Stapelauflage 16 vollständig abgesenkt und der Hauptstapel 11 in allgemein bekannter Art und Weise aus dem Hauptstapelschacht 5 hinaus gefördert. In diesem Zusammenhang sei ausdrücklich erwähnt, dass der Hauptstapelschacht 5 auch wie in Dokument EP 1 445 224 A offenbart ausgebildet sein kann.

Oberhalb des Hauptstapelschachtes 5 ist ein Vorstapelschacht 6 angeordnet, welcher mit einer Umlaufanordnung 31 zusammenwirkt. Die Stapelbildungseinrichtung 1 weist ferner eine Zuführvorrichtung 3 zum Zuführen von flächigen Produkteinheiten 9, im vorliegenden Fall von gefalteten Druckereiprodukten, wie Zeitungen oder Zeitschriften, zum Vorstapelschacht 6 auf.

Die Zuführvorrichtung 3 ist hier als Bandförderer ausgebildet. Der Bandförderer 3 weist ein in Zuführrichtung Z umlaufend angetriebenes Förderband 42 und ein oberhalb von diesem angeordnetes Andrückband 43 auf, welche zusammen einen Förderspalt 44 für die Produkteinheiten 9 bilden.

Die Produkteinheiten 9 liegen in einer Schuppenformation dem Förderband 42 auf, wobei jede Produkteinheit 9 auf der in Zuführrichtung Z gesehen voraus laufenden Produkteinheit 9 partiell aufliegt. Der Förderspalt 44 endet in Zuführrichtung Z gesehen beim oberen Ende des Vorstapelschachts 6, so dass die Produkteinheiten 9 von oben und von der Seite dem Vorstapelschacht 6 zugeführt werden.

Eine Produkteinheit 9 wie sie in Figur 1b schematisch gezeigt ist, zeichnet sich durch eine Breite b, eine Tiefe a, sowie durch eine Höhe h aus.

Der Vorstapelschacht 6 ist in Zuführrichtung Z gesehen auf der der Zuführung gegenüber liegenden Seite durch ein in vertikaler Richtung verlaufendes vorderes Stapelbegrenzungselement 45, hier in Form einer Anschlagleiste, begrenzt. Die vom Förderspalt 44 frei gegebenen Produkteinheiten 9 gelangen mit ihrer voraus laufenden Kante 46 in Berührung/Kontakt mit der Anschlagleiste 45.

Auf der der Zuführung zugewandten Seite ist der Vorstapelschacht 6 durch ein hinteres Stapelbegrenzungselement 15, hier in Form eines flächigen Wandelementes, begrenzt. Die Lage des hinteren Stapelbegrenzungselements 15 ist zur Umlaufanordnung 31 hin mittels eines Verstellelements 16, beispielsweise mit Aktuatoren wie ein Zylinderkolbenaggregat, entsprechend der Tiefe a der zu stapelnden Produkteinheiten 9 einstellbar.

An den verbleibenden beiden Seiten, welche in Figur 1 betrachtet parallel zur Zeichnungsfläche verlaufen, ist der Vorstapelschacht 6 durch nicht gezeigte, seitliche Stapelbegrenzungselemente, z. B. in Form von Wandelementen, begrenzt.

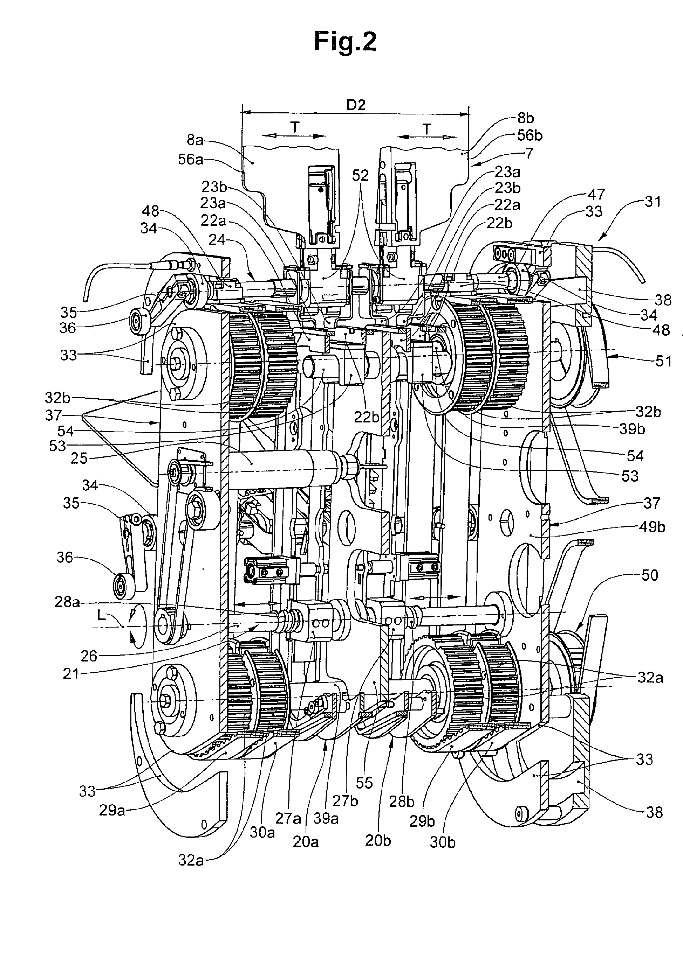

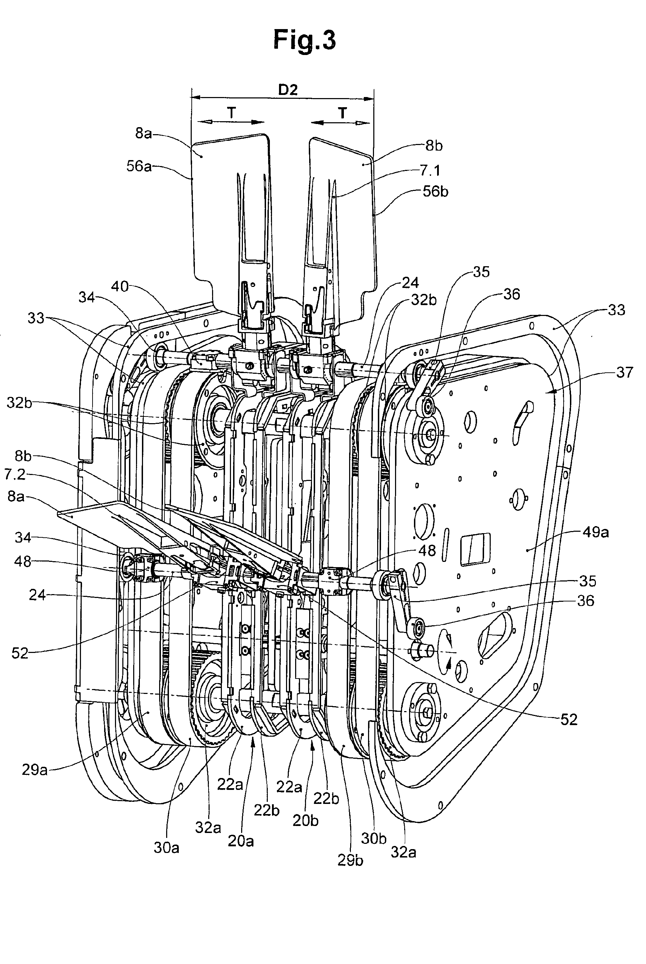

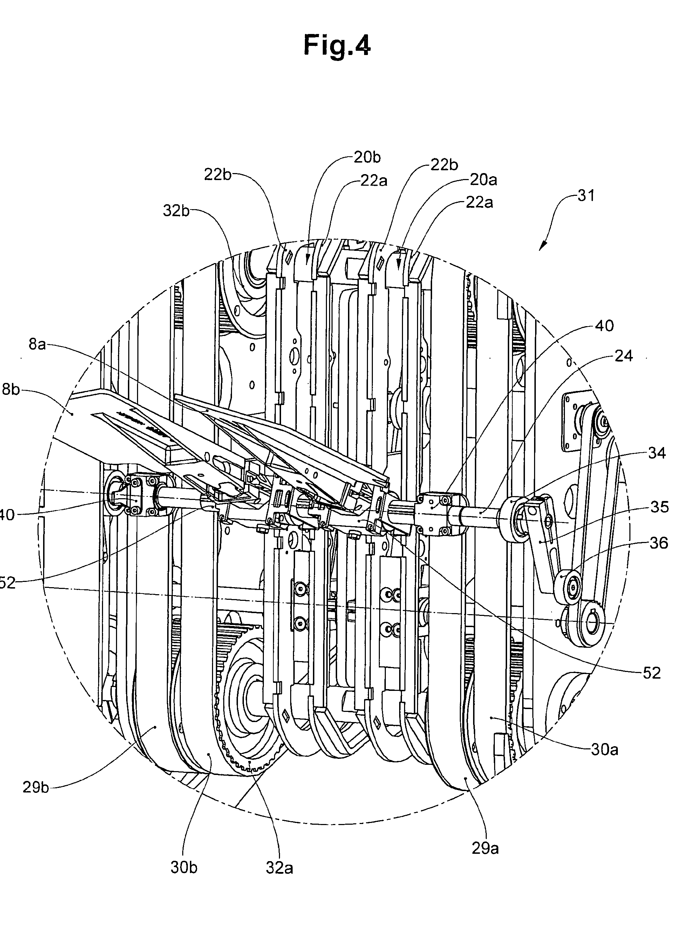

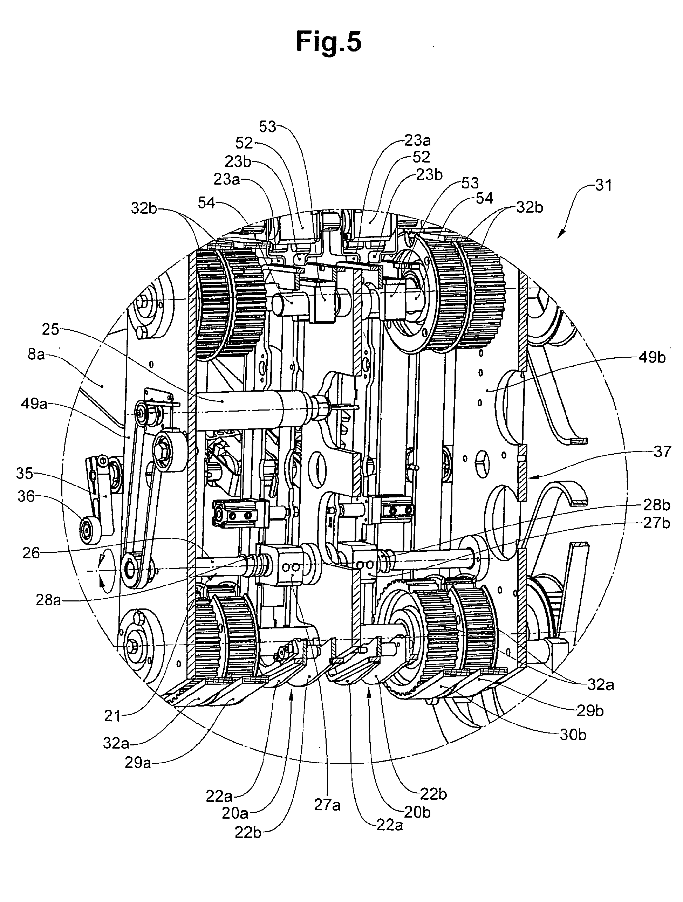

Auf der der Zuführung gegenüber liegenden Seite des Vorstapelschachts 6 befindet sich eine Umlaufanordnung 31 mit Antriebsmitteln für entlang einer Umlaufbahn U umlaufende Auflageeinheiten 7, welche im Zusammenhang mit den Figuren 2 bis 5 näher beschrieben werden.

Die Umlaufanordnung 31 weist vier entlang der Umlaufbahn U hintereinander angeordnete Auflageeinheiten 7 auf, wobei jeweils abwechslungsweise eine erste Auflageeinheit 7.1 und eine zweite Auflageeinheit 7.2 einander folgen. Die beiden ersten Auflageeinheiten 7.1 sind an einem ersten Fördermittel, im vorliegenden Fall bestehend aus zwei Zahnriemen 29a, 29b, angeordnet, während die beiden zweiten Auflageeinheiten 7.2 an einem zweiten Fördermittel, bestehend aus zwei weiteren Zahnriemen 30a, 30b, angeordnet sind. Die beiden Zahnriemenpaare werden, wie nachfolgend anhand der Figuren 2 bis 5 näher beschrieben, unabhängig voneinander angetrieben.

Wie in Figur 1a dargestellt, sind die Auflageeinheiten 7 um eine Schwenkachse 47 schwenkbar gelagert, welche quer zur Umlaufbahn U und somit zur Umlauf- bzw. Bewegungsrichtung B der Auflageeinheiten 7 verläuft.

Wie aus Figur 1c zu entnehmen ist, weist die erfindungsgemässe Stapelbildungseinrichtung 1 ein erstes und zweites, seitliches Stapelbegrenzungselement 59a, 59b auf, welche in Zuführrichtung Z der Produkteinheiten 9 seitlich angeordnet sind, und welche die zu Vorstapeln 10 zusammengetragenen Produkteinheiten 9 seitlich ausrichten. Die seitlichen Stapelbegrenzungselemente 59a, 59b weisen zueinander einen Abstand D1, welcher von der Breite der Produkteinheiten 9 abhängt.

Die beiden seitlichen Stapelbegrenzungselemente 59a, 59b sind Teil einer Seitenbegrenzungseinrichtung 60, welche im Weiteren ein Schraubgetriebe mit einer Gewindespindel 57 mit zwei entlang ihrer Längsachse angeordneten, gegenläufigen Gewindeabschnitte 61a, 61b aufweist. Die Gewindespindel 57 ist quer zur Zuführrichtung Z angeordnet.

Ein erster Gewindeabschnitt 59a greift in einen mit dem ersten seitlichen Stapelbegrenzungselement 59a verbundenen, ersten Gegengewindekörper 62a ein. Ein zweiter Gewindeabschnitt 59b greift in ein mit dem zweiten seitlichen Stapelbegrenzungselement 59b verbundenen zweiten Gegengewindekörper 62b ein. Die beiden seitlichen Stapelbegrenzungselemente 59a, 59b bewegen sich nun bei einer Spindeldrehung gegenläufig aufeinander zu oder voneinander weg. Auf diese Weise lassen sich über eine gemeinsame Gewindespindel 57 beide seitlichen Stapelbegrenzungselemente 59a, 59b gegenläufig zueinander lateral verschieben. Die Gewindespindel 57 wird hierzu über einen Antriebsmotor 58 angetrieben, d.h. in Drehung versetzt. Durch diese laterale Verschiebung lässt sich der Abstand D1 verändern und an das Produktformat anpassen.

Wie aus den Figuren 2 bis 5 ersichtlich ist, weist jede Auflageeinheit 7 zwei quer zur Umlaufbahn. bzw. in Richtung der Schwenkachse 47 voneinander beabstandete, flächig ausgebildete Auflageelemente 8a, 8b auf, welche über Halterungen 52 an einem parallel zur Schwenkachse 47 verlaufenden Querführungselement 24 befestigt sind. Die Auflageelemente 8a, 8b sind in lateraler Richtung T verschiebbar, jedoch drehfest am Querführungselement 24 gelagert.

Die Halterungen 52 weisen hierzu einen Durchbruch auf, durch welchen das Querführungselement 24 lateral verschiebbar jedoch drehfest geführt ist. Das Querführungselement 24 ist in vorliegendem Ausführungsbeispiel als Rundprofil ausgebildet. Die Halterung 52 kann ein oder mehrteilig ausgebildet sein.

Der Vollständigkeit sei noch erwähnt, dass das vordere Stapelbegrenzungselement 45 im Stapelschacht 4 zwischen den beiden Auflageelementen 8a, 8b und/oder daneben positioniert ist.

Die Umlaufanordnung 31 weist eine Tragstruktur 37 auf, an welcher die Vorrichtungskomponenten direkt oder indirekt befestigt sind. Die Tragstruktur 37 weist unter anderem zwei seitliche Schilde 49a, 49b auf.

Die Querführungselemente 24 weisen jeweils beidseits an ihren seitlichen Enden eine Steuerrolle 34 auf, welche mit einer Kulissenführung 33 an den seitlichen Schildern 49a, 49b kooperiert. Die Querführungselemente 24 und mit Ihnen die Auflageelemente 8a, 8b werden über die in der Steuerkulisse 33 geführten Steuerrolle 34 in Umlaufrichtung B geführt.

In vorliegendem Ausführungsbeispiel sind die beidseitig angeordneten Steuerrollen 34 sämtlicher Auflageeinheiten 7 entlang zweier gemeinsamen, seitlich angeordneten und spiegelbildlich ausgebildeten Kulissenführungen 33 mit in sich geschlossener Führungsbahn geführt. Die durch die Kulissenführung 33 vorgegebene Umlaufbahn U begründet einen im Wesentlichen vertikal und parallel zum Stapelschacht 4 verlaufenden Arbeitsabschnitt, entlang welchem die Auflageelemente 8a, 8b der Auflageeinheiten 7 von oben nach unten, also der Schwerkraft folgend, durch den Vorstapelschacht 6 geführt werden.

Das Querführungselement 24 ist an Lagerelementen 48 frei drehbar gelagert, wobei die Lagerelemente 48 an den diesen zugeordneten Zahnriemen 29a, 29b; 30a, 30b befestigt sind. Die Querführungselemente 24 und somit die Auflageelemente 8a, 8b werden nun über die Lagerelemente 48 entlang der Umlaufbahn U durch die Zahnriemen 29a, 29b; 30a, 30b angetrieben.

An das Querführungselement 24 ist beidends ferner jeweils ein Schwenkarm 35 mit einer distal angeordneten Steuerrolle 36 drehfest angeordnet. Die Schwenklage der Auflageelemente 8a, 8b lässt sich nun durch die Bewegung des Schwenkarms 35 um die Schwenkachse 47 des Querführungselementes 24 verändern. Hierzu kooperiert die Steuerrolle 36 des Schwenkarms 35 mit einer weiteren Kulissenführung 38, über welche die Position des Schwenkarms 35 um die Schwenkachse 47 und somit die Schwenklage der Auflageelemente 8a, 8b einstellbar ist.

In vorliegendem Ausführungsbeispiel sind die beidseitig angeordneten Steuerrollen 36 sämtlicher Auflageeinheit 7 in zwei seitlich angeordneten gemeinsamen Kulissenführungen 38 mit in sich geschlossener Führungsbahn geführt (nicht gezeigt). Die beiden spiegelbildlich ausgebildeten und angeordneten Kulissenführungen 38 bilden die Schwenkführung. Die Schwenklage der Auflageeinheit 7 ist derart gesteuert, dass die Auflageelemente 8a, 8b bei Eintritt in den vorgenannten Arbeitsabschnitt in den Vorstapelschacht 6 eingeschwenkt werden. Im Weiteren ist die Schwenklage der Auflageeinheit 7 derart gesteuert, dass die Auflageelemente 8a, 8b beim Verlassen des Arbeitsabschnittes unter Abgabe des Vorstapels 10 an den darunter liegenden Stapeltisch 41 aus dem Vorstapelschacht 6 heraus geschwenkt werden.

Die Zahnriemenpaare 29a, 29b sowie 30a, 30b, welche jeweils die ersten bzw. zweiten Auflageeinheiten 7.1, 7.2 antreiben, sind beim oberen Ende des Vorstapelschachts 6 um gleichachsig angeordnete obere Umlenkwalzen 32b und in einem unteren Ende des Vorstapelschachts 6 um ebenfalls gleichachsig angeordnete untere Umlenkwalzen 32a geführt. Zwischen den oberen und unteren Umlenkwalzen 32a, 32b verläuft der zur Zuführvorrichtung 3 gerichtete, im Wesentlichen vertikal durch den Vorstapelschacht 6 hindurch führende Arbeitsabschnitt der Umlaufbahn U.

Die vier unteren Umlenkwalzen 32a sind auf einer gemeinsamen unteren Welle 39a angeordnet, welche über einen Zahnriementrieb 50 mit einem ersten Antriebsorgan (nicht gezeigt) verbunden ist. Entsprechend sind die vier oberen Umlenkwalzen 32b auf einer oberen Welle 39b angeordnet, welche ihrerseits über einen Zahnriementrieb 51 mit einem zweiten Antriebsorgan (nicht gezeigt) verbunden ist.

Die unteren Umlenkwalzen 32a, um welche die Zahnriemen 29a, 29b geführt sind, sind drehfest mit der unteren Welle 39a verbunden, während die beiden anderen unteren Umlenkwalzen 32a, um welche die weiteren Zahnriemen 30a, 30b geführt sind, frei drehbar auf der unteren Welle 39a lagern. Die untere Welle 39a ist somit eine Antriebswelle für die Zahnriemen 29a, 29b und somit der ersten Auflageeinheiten 7.1.

Die ersten Auflageeinheiten 7.1 werden somit vom ersten Antriebsorgan angetrieben.

Entsprechend sitzen auf der oberen Welle 39b die den weiteren Zahnriemen 30a, 30b zugeordneten oberen Umlenkwalzen 32b drehfest, während die den Zahnriemen 29a, 29b zugeordneten oberen Umlenkwalzen 32b auf der oberen Welle 39b frei drehbar gelagert sind.

Die zweiten Auflageeinheiten 7.2 und werden somit vom zweiten Antriebsorgan angetrieben. Die Lager für die Wellen sind an den beiden seitlichen Schildern 49a, 49b befestigt.

Die in einer gemeinsamen Ebene entlang der Umlaufbahn U umlaufenden Auflageelemente 8a, 8b der Auflageeinheiten 7 stehen jeweils mit einem gemeinsamen Positionierungsmittel 20a, 20b in Wirkverbindung, welches in der Lage ist, die Auflageelemente 8a, 8b einer Auflageeinheit 7 relativ zueinander lateral zu verschieben und die Distanz D2 zwischen den seitlichen Aussenkanten 56a, 56b einer Auflageeinheit 7 einzustellen.

Die Umlaufanordnung 31 weist nun ein erstes Positionierungsmittel 20a für die erste Auflageelemente 8a der Auflageeinheiten 7 und ein zweites Positionierungsmittel 20b für die zweite Auflageelemente 8b der Auflageeinheiten 7 auf, welche parallel nebeneinander und voneinander beabstandet zwischen den beiden Seitenschildern 49a, 49b in der Umlaufanordnung 31 angeordnet sind. Zwischen den beiden Positionierungsmittel 20a, 20b ist ferner ein Zwischenschild 55 als weiteres Bauteil der Tragstruktur 37 angeordnet.

Das Positionierungsmittel 20a, 20b weist jeweils zwei voneinander beabstandete und parallel nebeneinander geführte Seitenbegrenzungsbauteile 22a, 22b in Form von Führungsleisten, mit einer in der Umlaufanordnung 31 in Bewegungsrichtung B der Auflageeinheiten 7 geschlossen umlaufenden Seitenbegrenzungsfläche auf. Die Seitenbegrenzungsbauteile 22a, 22b sind insbesondere auch um die obere und untere Antriebswelle 39a, 39b geführt.

Jedem Auflageelement 8a, 8b sind jeweils zwei Führungslaschen 23a, 23b zugeordnet und stehen mit diesem in mechanischer Wirkverbindung. Die Führungslaschen 23a, 23b sind hier mit dem Querführungselement 24 lateral bzw. axial verschiebbar verbunden. Die Führungslaschen 23a, 23b können jedoch auch mit den dazugehörigen Halterungen 52 verbunden sein.

Die Führungslaschen 23a, 23b weisen Führungsabschnitte auf, welche auf der den Auflageelementen 8a, 8b entgegen gesetzt liegenden Seite zwischen die Seitenbegrenzungsbauteile 22a, 22b eingreifen. Wird nun das Positionierungsmittel 20a, 20b in ein der beiden lateralen Richtungen T quer zur Umlaufrichtung B bewegt, so kommt das eine der beiden Seitenbegrenzungsbauteile 22a, 22b mit einer der beiden Führungslaschen 23a, 23b in Anschlag, so dass bei fortgesetzter lateraler Verschiebung die Führungslasche 23a, 23b und damit das dazugehörige Auflageelement 8a, 8b mitgenommen und ebenfalls lateral entlang des Querführungselementes 24 verschoben wird.

Bei Verschieben des Positionierungsmittel 20a, 20b in die andere laterale Richtung kommt das andere Seitenbegrenzungsbauteil 22a, 22b mit der anderen Führungslasche 23a, 23b in Anschlag, so dass bei fortgesetzter lateraler Verschiebung die andere Führungslasche 23a, 23b und damit das andere dazugehörige Auflageelement 8a, 8b mitgenommen und in die andere laterale Richtung entlang des Querführungselementes 24 verschoben wird.

Die beiden Seitenbegrenzungsbauteile 22a, 22b sind über Verbindungselemente 53 miteinander verbunden. Die Verbindungselemente 53 und somit das Positionierungsmittel 20a, 20b sind auf Querachselementen 54 lateral verschiebbar gehaltert. Die Querachselemente 54 sind an einem zwischen den beiden Seitenschilden 49a, 49b liegenden Zwischenschild 55 der Tragstruktur 37 befestigt.

Die laterale Verschiebung der beiden Positionierungsmittel 20a, 20b erfolgt über ein gemeinsames Schraubgetriebe 21. Dieses enthält eine über einen Antriebsmotor 25 angetriebene Gewindespindel 26. Die Gewindespindel 26 weist entlang ihrer Längsachse zwei gegenläufige Gewindeabschnitte 28a, 28b auf. Ein erster Gewindeabschnitt 28a greift in einen mit dem ersten Positionierungsmittel 20a verbundenen ersten Gegengewindekörper 27a ein und ein zweiter Gewindeabschnitt 28b greift in ein mit dem zweiten Positionierungsmittel 20b verbundenen zweiten Gegengewindekörper 27b ein. Die Positionierungsmittel 20a, 20b bewegen sich nun bei einer Spindeldrehung gegenläufig aufeinander zu oder voneinander weg. Auf diese Weise lassen sich über eine gemeinsame Gewindespindel und eine gemeinsame Drehbewegung beide Auflageelemente 8a, 8b gegenläufig zueinander gleichmässig lateral verschieben.

Die Gewindespindel 26 ist einerseits an den beiden Seitenschilden 49a, 49b und andererseits auch am Zwischenschild 55 drehbar gelagert. An einem der beiden Seitenschilde 49a ist ein Riemengetriebe angeordnet, über welches das Antriebsmoment vom Antriebsmotor 25 auf die Gewindespindel 26 übertragen wird. Der Antriebsmotor 25 ist zwischen diesem einen Seitenschild 49a und dem Zwischenschild 55 angeordnet und an den genannten Schilden 49a, 55 abgestützt.

Die Funktionsweise der erfindungsgemässen Vorrichtung wird ausgehend von der in Figur 1 dargestellten Situation beschrieben. Die Auflageelemente 8a, 8b einer ersten Auflageeinheit 7.1 befinden sich beim oberen Ende des Vorstapelschachts 6 mit ihren frei liegenden Enden der Zuführung zugewandt. Die in Zuführrichtung Z gesehen vorderste Produkteinheit 9, welche vom Förderspalt 44 bereits frei gegeben worden ist, gleitet auf den in Zuführrichtung Z gesehen schräg fallend angeordneten Auflageelementen 8a, 8b der ersten Auflageeinheiten 7.1 auf das vordere Stapelbegrenzungselement 45 zu, von welchem es gestoppt wird und an welchem es zur Anlage gelangt. Die darauf folgenden in Schuppenformation zugeführten Produkteinheiten 9 gleiten entsprechend auf den jeweils voraus laufenden Produkteinheiten 9 unter Bildung eines Vorstapels 10 in den Vorstapelschacht 6 hinein. Entsprechend der Höhe der bereits gestapelten Produkteinheiten 9 wird die erste Auflageeinheit 7.1 entlang der Umlaufbahn U in Umlaufrichtung B abgesenkt.

Gemäss Figur 1 befindet sich unterhalb der ersten Auflageeinheit 7.1 eine zweite Auflageeinheit 7.2, auf welcher ein vorgängig erstellter Vorstapel 10 angeordnet ist. Ausgehend von dieser Position werden die zweiten Auflageeinheiten 7.2 beschleunigt und entlang der Umlaufbahn U in Umlaufrichtung B bewegt, bis das andere zweite Auflageeinheit 7.2 sich in der strichpunktiert angedeuteten Warteposition befindet. Durch die Umlenkung der unteren, zweiten Auflageeinheit 7.2 um die unteren Umlenkwalzen 32a und gesteuert durch die Schwenkführung wird die mit dem Vorstapel 10 beladene zweite Auflageeinheit 7.2 rasch in Richtung gegen unten und seitlich aus dem Vorstapelschacht 6 herausgeschwenkt, wodurch der betreffende Vorstapel 10 von der zweiten Auflageeinheit 7.2 freigegeben und an den Stapeltisch 41, beziehungsweise einen bereits auf diesem angeordneten Vorstapel 10, abgegeben wird.

Nach der Übergabe eines Zwischenstapels 10 an den Stapelschacht 41 kann dieser mittels Drehmittel 14 um die Vertikalachse V um 180° (Winkelgrade) gedreht werden, so dass ein gerader Hautstapel 11 aufgebaut werden kann, in welchem die aufeinander folgenden Vorstapel 20 jeweils um 180° gedreht angeordnet sind. Zur Aufnahme jeweils eines ersten Vorstapels 10 wird der Stapeltisch 41 in eine obere Endlage angehoben und dann mittels Höhenverstellmittel 13 jeweils in Abhängigkeit von der Höhe der Vorstapel 10 abgesenkt. Ist ein Hauptstapel 11 fertig gebildet, wird der Stapeltisch 41 vollständig abgesenkt und in allgemein bekannter Art und Weise der Hauptstapel 11 aus dem Hauptstapelschacht 5 heraus gefördert.

Ist auf der ersten Auflageeinheit 7.1, entsprechend Figur 1, ein Vorstapel 10 fertig gebildet, wird das in Umlaufrichtung B gesehen dieser ersten Auflageeinheit 7.1 unmittelbar nachlaufende zweite Auflageeinheit 7.2, welche sich in Warteposition befindet, in Umlaufrichtung B in die Aufnahmeposition gebracht - in welcher die erste Auflageeinheit 7.1 mit ausgezogenen Linien gezeigt ist - um darauf aus weiteren zugeführten Produkteinheiten 9 einen weiteren Vorstapel 10 zu bilden. Beim Bewegen der jeweiligen Auflageeinheit 7.1, 7.2 von der Warteposition in die Aufnahmeposition stechen die beiden Auflageelemente 8a, 8b mit ihren frei liegenden, der Zuführung zugewandten Ende, zwischen zwei aufeinander folgende Produkteinheiten 9 ein, wodurch selbst bei sehr hoher Verarbeitungskapazität eine problemlose Trennung der Produkteinheiten 9 gewährleistet ist. Der beschriebene Arbeitszyklus wiederholt sich somit so oft wie notwendig, abwechslungsweise mit ersten und zweiten Auflageeinheiten 7.1, 7.2. Ein Stapelbildungszyklus zur Bildung eines Hauptstapels 11 dauert beispielsweise 1,8 Sekunden. Im vorliegenden Ausführungsbeispiel wird ein Hauptstapel 11 aus zwei Vorstapeln 10 gebildet. Die Bildung eines Vorstapels findet daher gemäss den vorgenannten Zeitangaben in 0,9 Sekunden statt. Entsprechend kurz ist auch die Eintauchzeit der Auflageeinheit, welche einen Bruchteil von 0,9 Sekunden entspricht. Der Eintauchvorgang ist so angelegt, dass die Auflageeinheit 7.1, 7.2 zwischen zwei aufeinander folgenden Produkteinheiten 9 einsticht, wobei die vorangehende Produkteinheit noch zum vorangehenden Vorstapel geführt wird und die nachfolgende Produkteinheit die erste Produkteinheit des nachfolgenden Vorstapels bildet.

Ändert nun während des Betriebes das Flächenformat der Produkteinheiten 9, so wird über die Steuerungseinrichtung der Antriebsmotor 25 der Verstellmittel 21 angesteuert und durch Drehung der Gewindespindel 26 die Distanz D2 zwischen den seitlichen Aussenkanten 56a, 56b der Auflageeinheiten 7 auf das geänderte Format der Produkteinheiten 9 eingestellt. Die Formatumstellung wird wenn möglich so gesteuert, dass die Auflageeinheiten 7 mit der richtigen Formateinstellung, das heisst mit der richtigen Distanz D2 zwischen den seitlichen Aussenkanten 56a, 56b der Auflageeinheiten 7, in den Stapelbildungsprozess im Vorstapelschacht 6 eingeführt werden. Hierzu bedarf es fallweise einer Lücke zwischen den Produkteinheiten 9 eines ersten Produktstromes und den Produkteinheiten 9 mit geänderten Flächenformaten eines folgenden Produktstromes. Die Veränderung der Distanz D2 kann z. B. während dem Wechsel der einen Auflageeinheit 7 von der Warteposition in die Aufnahmeposition durch Einstechen der beiden Auflageelemente 8a, 8b zwischen zwei aufeinander folgende Produkteinheiten 9 geschehen. Es kann im Übrigen auch vorgesehen sein, dass die Auflageeinheiten 7 individuell auf das geänderte Flächenformat umgestellt werden.

Die Antriebsorgane, welche die ersten und zweiten Auflageeinheiten 7.1, 7.2 antreiben, sind im Übrigen je nach Produktzufuhrleistung, der Höhe der Vorstapel 10, der Produktseitenanzahl, der gewünschten Förderleistung von Produkten usw. zeitlich unabhängig voneinander steuerbar.

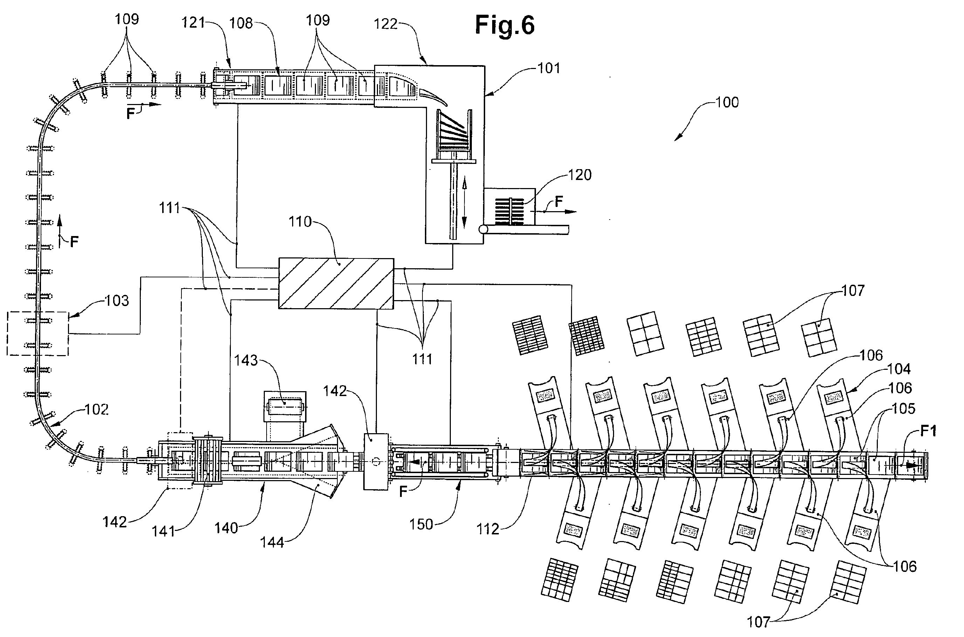

Die in den Figuren 6 bis 8 gezeigten Ausführungsformen von Verarbeitungsanlagen 100, 200, 300 dienen der Verarbeitung von flächigen, flexiblen Druckereiprodukten. Den dargestellten Ausführungsformen ist gemeinsam, dass diese jeweils eine Zusammentrageinrichtung 104, 204, 304 zum Zusammentragen der Druckereiprodukte zu Kollektionen, Sammlungen oder Zusammenstellungen aufweisen. Eine solche Zusammentrageinrichtung ist z. B. auch in der CH 699 866 beschrieben. Die Zusammentrageinrichtung 104, 204, 304 enthält Fördermittel mit einer Mehrzahl von hintereinander entlang einer Förderbahn verfahrbaren Förderabteilen 105, 205, 305. Die Förderabteile 105, 205, 305 werden an Zuführeinheiten 106, 206, 306 hier beispielhaft beidseitig angeordnet und deren Zwölf in der Anzahl, vorbei geführt. Über die Zuführeinheiten 106, 206, 306 werden zwecks Erstellung einer Kollektion einzelne Produkte von einem Stapel den an diesen vorbei geführten Förderabteilen 105, 205, 305 übergeben.

Die Zuführeinheiten 106, 206, 306 werden gemäss der gezeigten Ausführungsform manuell mit Produkten ab Paletten 107, 207, 307 beschickt. Der Einfachheit halber sind nicht sämtliche Paletten mit Produkten dargestellt.

Die Zuführeinheiten 106, 206, 306 können jedoch auch über eine automatisierte Einrichtung automatisch mit Produkten beschickt werden. So können die Zuführeinheiten ab einem Produktwickel (nicht gezeigt) automatisiert mit Produkten versorgt werden.

Jedes Förderabteil 105, 205, 305 weist eine Auflagefläche auf, auf welcher die von den Zuführeinheiten 106, 206, 306 zugeführten Produkte abgelegt und zu einer Kollektion 114, 214, 314 zusammengestellt werden, welche Teil einer später im Laufe des Verarbeitungsprozesses erstellten Produkteinheit 109, 209, 309 ist. Der Zusammentrageinrichtung 104, 204, 304 ist im Weiteren eine Seitenrichteinheit 112, 212, 312 mit beidseitig von den Förderabteilen 105, 205, 305 angeordneten Seitenrichtmittel zum seitlichen Ausrichten der auf den Förderabteilen 105, 205, 305 abgelegten Produkte zugeordnet. Es ist natürlich auch möglich, mit der beschriebenen Einrichtung eine Sequenz einzelner Produkte oder Stapel von gleichen Produkten zu erzeugen. Ferner ist es auch möglich, gleichformatige Teilprodukte, wie einzelne Falzbögen, bzw. gefalzte Bögen (Signaturen) zusammenzutragen.

Die Förderabteile 105, 205, 305 sind hier in einer geschlossenen Umlaufbahn geführt, wobei die Förderabteile 105, 205, 305 in einem oberen Bahnabschnitt in eine erste Förderrichtung F1 transportiert und mit Produkten von den Zuführeinheiten 106, 206, 306 beschickt werden. Entlang eines unteren Bahnabschnittes (nicht gezeigt) werden die Förderabteile 105, 205, 305 in einer der ersten Förderrichtung F1 entgegen gerichteten, zweiten Förderrichtung zurückgeführt.

An die Zusammentrageinrichtung 104, 204, 304 schliesst in Verarbeitungsrichtung betrachtet ferner jeweils eine Positionierungseinrichtung 150, 250, 350 zum Positionieren und Eintakten der Kollektionen 114, 214, 314 an. In der Positionierungseinrichtung 150, 250, 350 werden die Kollektionen 114, 214, 314 vor der Übergabe an eine nachfolgende Verarbeitungseinrichtung seitlich und in definierten Abständen zueinander ausgerichtet. Die Positionierungseinrichtung 150, 250, 350 kann z. B. ein umlaufendes Nockenband mit vor- und/oder nachlaufenden Nocken umfassen, wobei die Kollektionen bzw. Produkteinheiten 150, 250, 350 an den umlaufenden Nocken ausgerichtet werden.

Den dargestellten Ausführungsformen ist ferner gemeinsam, dass diese im Anschluss an weitere Verarbeitungsschritte, in welchen sich die Anlagen unterscheiden, jeweils eine Einrichtung zum Stapeln von Produkteinheiten 101, 201, 301 umfassen. Die Produkteinheiten 109, 209, 309 werden in der Stapelbildungseinrichtung 101, 201, 301 zu Produktstapeln 120, 220, 320 zusammengefasst und für den nachfolgenden Abtransport in einer Bindestation gebunden.

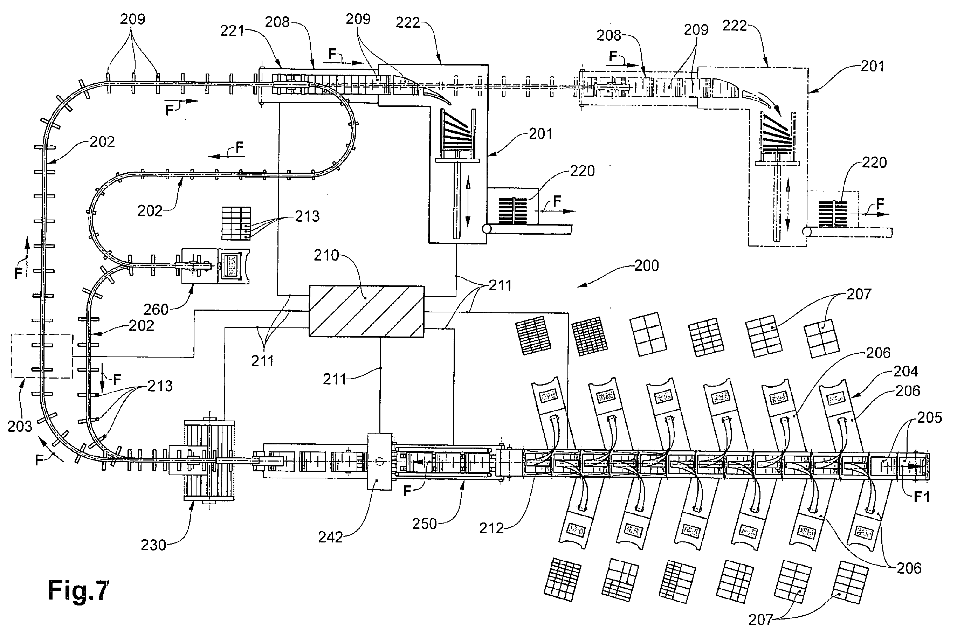

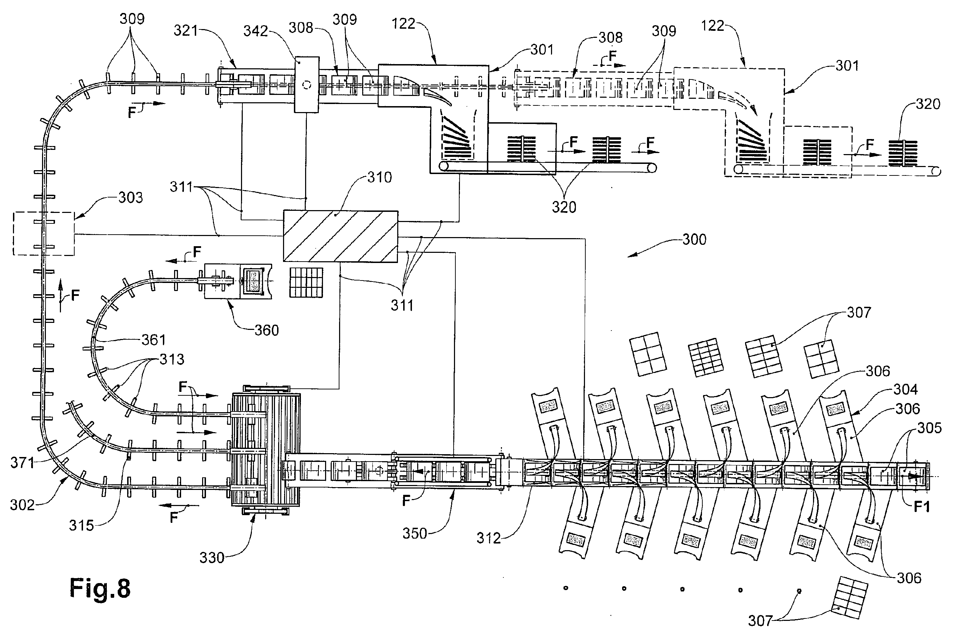

Die Einrichtung zum Stapeln von Produkteinheiten 101, 201, 301 umfasst eine Zuführeinrichtung 121, 221, 321, in welcher die Produkteinheiten 109, 209, 309 vereinzelt in einem Produktstrom oder in einem Schuppenstrom 108, 208, 308 einer an diese anschliessenden Stapelvorrichtung 122, 222, 322 zugeführt werden. Die Einrichtung zum Stapeln von Produkteinheiten 101, 201, 301 gemäss den Ausführungsbeispielen nach Figur 6 bis 8 kann einer Einrichtung zum Stapeln von Produkteinheiten gemäss Figur 1 und dazugehörige Beschreibung bzw. gemäss der Beschreibung im allgemeinen Beschreibungsteil sein (siehe insbesondere Figur 6 und 7). Die besagte Einrichtung 101, 201, 301 kann jedoch auch anders ausgestaltet sein (siehe insbesondere Figur 8). Wie anhand der Figuren 7 und 8 gezeigt ist, kann die Verarbeitungsanlage 101, 201, 301 eine oder mehrere der genannten Stapelbildungseinrichtungen 101, 201, 301 aufweisen. Die Verarbeitungsanlage 101, 201, 301 kann z. B. mit einem Weichensystem ausgestattet (nicht gezeigt), welches erlaubt, die über eine gemeinsame Fördereinrichtung den Stapelbildungseinrichtungen 101, 201, 301 zugeführten Produkteinheiten 101, 201, 301 gezielt einzelnen Stapelbildungseinrichtungen 101, 201, 301 zuzuführen.

Die Zuteilung der Produkteinheiten 101, 201, 301 zu den einzelnen Stapelbildungseinrichtungen 101, 201, 301 kann auch über gezieltes Auslösen von Klammern, insbesondere Greifern, geschehen, wenn diese die Produkteinheiten 101, 201, 301 an den einzelnen Stapelbildungseinrichtungen 101, 201, 301 vorbeifördern.

Die in Figur 6 dargestellte Ausführungsform einer Verarbeitungsanlage 100 enthält eine im Anschluss an die Positionierungseinrichtung 150 angeordnete Verpackungseinrichtung 140. Zwischen der Positionierungseinrichtung 150 und der Verpackungseinrichtung 140 bzw. am Anfang der Verpackungseinrichtung 140 ist eine Adressiereinheit 142 angeordnet. Die Adressiereinheit 142 kann jedoch auch im Anschluss an die bzw. am Ende der Verpackungseinrichtung 140 angeordnet sein. Die Adressiereinheit 142 ist hierzu als auswechselbares Modul ausgebildet, welches wahlweise vor oder nach bzw. am Anfang oder Ende der Verpackungseinrichtung 140 an die Verarbeitungsanlage gekoppelt werden kann. Selbstverständlich kann das Adressmodul auch Teil der Verpackungseinrichtung 140 sein. In der Adressiereinheit 142 werden die Kollektionen 114 mit einer Adresse versehen, welche z. B. über entsprechende Beschriftungsmittel direkt auf ein aussen liegendes Produkt aufgetragen wird, oder welche auf einem separaten Deckblatt oder Etikett aufgetragen der Kollektion 114 zugeführt wird. Wird die Adresse jedoch auf die Verpackungshülle aufgebracht oder über ein Etikett auf die Verpackungshülle aufgeklebt, so kann die Adressiereinheit auch im Anschluss an die Verpackungseinheit angeordnet sein.

Im Anschluss an die Adressiereinheit 142 bzw. die Positionierungseinrichtung 150 werden die Kollektionen 114 über entsprechende Fördermittel in Reihe hintereinander und voneinander beabstandet in die Verpackungseinrichtung 140 geführt, wo diese mit einer quasi endlos zugeführten Verpackungsmaterial-Bahn 144 umhüllt werden. Die Verpackungseinrichtung 140 enthält hierzu Mittel 143 zur Zuführung einer Verpackungsmaterial-Bahn 144 sowie zum Fördern der Verpackungsmaterial-Bahn 144 zusammen mit den in Reihe auf einer Förderunterlage geförderten Kollektionen 114. Des Weiteren enthält die Verpackungseinrichtung 140 eine Vorrichtung zum Umlegen der Verpackungsmaterial-Bahn und vollständigen Umhüllen der Kollektionen 114. In einer nachfolgenden Querschweisseinheit 141 wird die um die Kollektion 114 angeordnete Verpackungshülle über Längs- und Querverbindungen, welche z. B. als Schweissnähte ausgebildet sein können, verschlossen. Anschliessend werden die zu Produkteinheiten 109 verpackten Kollektionen 114 entlang der Querverbindungen voneinander getrennt. Die Verpackungsmaterial-Bahn 144 ist bevorzugt eine Kunststofffolie.

Nach Verlassen der Verpackungseinrichtung 140, werden die nun fertig erstellten Produkteinheiten 109 mittels einer, als Greiferförderer ausgebildeten Zwischenfördereinrichtung 102 der Stapelbildungseinrichtung 101 zugeführt und an die dazugehörige Zuführeinrichtung 121 übergeben. Zwischen der Verpackungseinrichtung 140 und der Stapelbildungseinrichtung 101 ist im Bereich der Zwischenfördereinrichtung 102 eine Kontroll- und Ausschleuseinrichtung 103 vorgesehen, an welcher die vorbei geförderten Produkteinheiten 109 z. B. auf ihre korrekte Position und Ausrichtung im Greifer überprüft und gegebenenfalls ausgeschleust werden.

In der in Figur 7 dargestellten Ausführungsform einer Verarbeitungsanlage 200 werden in der Zusammentrageinrichtung 204 Kollektionen 214 von Produkten zum Einstecken in einen Umschlag 213 zusammengestellt.

Die Verarbeitungsanlage 200 enthält eine im Anschluss an die Positionierungseinrichtung 250 angeordnete Adressiereinheit 242. In der Adressiereinheit 242 werden die Produkteinheiten 209 mit einer Adresse versehen, welche z. B. über entsprechende Beschriftungsmittel direkt auf ein aussen liegendes Produkt aufgetragen wird, oder welche auf einem separaten Deckblatt oder Etikett aufgetragen der Produkteinheit 209 zugeführt wird.

Die Verarbeitungsanlage 200 weist im Weiteren eine Einrichtung 260 zum Vereinzeln und Zuführen von Umschlägen 213 an eine als Greiferförderer ausgebildete Zwischenfördereinrichtung 202 auf. Die Umschläge können hierzu teilweise oder vollständig gefalzt oder zusammengeklappt sein.

Die Umschläge 213, welche in einem Flächenformat vorliegen können, welches grösser, gleich oder kleiner ist wie das Flächenformat der Kollektionen 214, werden einer Einsteckvorrichtung 230, wie sie z. B. in der WO 2009/143645 offenbart ist, zugeführt und in dieser zur Aufnahme von Kollektionen 214 geöffnet. Hierzu werden die in der Einsteckvorrichtung 230 umlaufenden Greifer des Greiferförderers 202 geöffnet, wobei die weiterhin in den Greifern mitgeführten, geöffnete Umschläge 213 durch Stütz- und Haltemittel der Einsteckvorrichtung 230 gehalten bzw. mitgeführt werden.

Nach dem Einstecken der Kollektionen 214 in die Umschläge 213 werden die Greifer wieder geschlossen und die nun fertig erstellten Produkteinheiten 209 mittels des Greiferförderers 202 weggefördert.

Die Kollektionen 214 werden zum Einstecken in die Umschläge im Anschluss an die Adressiereinheit 242 über entsprechende Fördermittel in Reihe hintereinander und voneinander beabstandet der Einsteckvorrichtung 230 zugeführt, wo diese in die geöffneten Umschläge 213 gesteckt werden. Die Adressierung der Kollektionen kann jedoch auch nach dem Einstecken erfolgen. Die Adressiereinheit ist in diesem Fall im Anschluss an die Einsteckvorrichtung angeordnet (nicht gezeigt).

Nach Verlassen der Einsteckvorrichtung 230 werden die Produkteinheiten 209 mittels des Greiferförderers 202 der Stapelbildungseinrichtung 201 zugeführt und an die dazugehörige Zuführeinrichtung 221 übergeben. Die leeren Greifer der Zwischenfördereinrichtung 202 werden nach der Übergabe der Produkteinheiten 209 an die Zuführeinrichtung 221 zwecks erneuter Aufnahme von Umschlägen 213 an die Vereinzelungs- und Zuführeinrichtung 260 zurückgeführt.

Zwischen der Einsteckvorrichtung 230 und der Stapelbildungseinrichtung 201 ist im Bereich der Zwischenfördereinrichtung 202 eine Kontroll- und Ausschleuseinrichtung 203 vorgesehen, an welcher die vorbei geförderten, Produkteinheiten 209 z. B. auf ihre korrekte Position und Ausrichtung im Greifer überprüft und gegebenenfalls ausgeschleust werden.

In der in Figur 8 dargestellten Ausführungsform einer Verarbeitungsanlage 300 werden in der Zusammentrageinrichtung 304 Kollektionen 314 von Produkten zum Einstecken in ein Hauptprodukt 313, wie Zeitung, zusammengestellt.

Die Verarbeitungsanlage 300 weist hierzu eine Einrichtung 360 zum Bereitstellen und Übergeben eines Hauptproduktes 313 an einen Greiferförderer 361 auf. Die Hauptprodukte 313 werden einer trommelförmigen Einsteckvorrichtung 330, wie sie z. B. in der CH 690 576 und der CH 689 864 offenbart ist, zugeführt und zum Einstecken von Kollektionen 214 in dasselbige an die Einsteckvorrichtung 330 abgeben und geöffnet.

Über einen weiteren Greiferförderer 371 können weitere Produktteile (fakultativ), z. B. ein Zeitungsbund, der Einsteckvorrichtung 330 zugeführt und in das Hauptprodukt 313 eingesteckt werden.

Die Kollektionen 314 werden zum Einstecken in das Hauptprodukt 313 im Anschluss an die Positionierungseinrichtung 350 über entsprechende Fördermittel in Reihe hintereinander und voneinander beabstandet der Einsteckvorrichtung 330 zugeführt, wo sie in die geöffneten Hauptprodukte 313 gesteckt werden. Die Hauptprodukte 313 mit den eingesteckten Kollektionen 314 bilden nun die fertigen Produkteinheiten 309. Man spricht in diesem Fall auch von Endprodukten.

Nach Verlassen der Einsteckvorrichtung 330 werden die Produkteinheiten 309 mittels einer, als Greiferförderer ausgebildete Zwischenfördereinrichtung 302 der Stapelbildungseinrichtung 301 zugeführt und an die dazugehörige Zuführeinrichtung 321 übergeben.

Zwischen der Einsteckvorrichtung 330 und der Stapelbildungseinrichtung 301 ist auch hier im Bereich der Zwischenfördereinrichtung 302 eine Kontroll- und Ausschleuseinrichtung 303 vorgesehen, an welcher die vorbei geförderten Produkteinheiten 309 z. B. auf ihre korrekte Position und Ausrichtung im Greifer überprüft und gegebenenfalls ausgeschleust werden.

Die Kontroll- und Ausschleuseinrichtung 103, 203, 303 gemäss den vorgenannten Ausführungsbeispielen oder weitere Kontroll- und Ausschleuseinrichtung in den genannten Ausführungsbeispielen kann auch dazu ausgelegt sein, andere Produktparameter zu überprüfen und die Produkteinheit fallweise auszuschleusen. Weitere Produktparameter können z. B. sein, ob ein Zusatzprodukt korrekt in ein Hauptprodukt eingesteckt oder korrekt aufgeklebt ist.

Die Fehlerüberprüfung kann über Sensoren erfolgen, welche z. B. nach einem opto-elektrischen Verfahren, z. B. mittels Laserstrahlen, oder über ein photooptisches Verfahren arbeiten.

Die Verarbeitungsanlagen 101, 201, 301 gemäss den beschriebenen Ausführungsformen nach Figur 6 bis 8 weisen jeweils eine Anlagensteuerung 210, 220, 320 auf, über welche die einzelnen Verarbeitungseinrichtungen und Verarbeitungseinheiten, bzw. deren Steuerungseinheiten, mittels Kommunikationsleitungen 211 ansteuerbar sind. Die Ansteuerung kann zentral über die Anlagensteuerung 210, 220, 320 oder dezentral über lokale Steuerungsvorrichtungen (nicht gezeigt) in den einzelnen Verarbeitungseinrichtungen erfolgen, wobei die lokalen Steuerungsvorrichtungen Steuersignale oder steuerungsrelevante Daten z. B. von der Anlagensteuerung erhalten.

Bei einem Formatwechsel, insbesondere bei einem Wechsel des Grössen- bzw. Flächenformats, sind nun unter Umständen Umstellungen von Bauteilanordnungen notwendig in:
- einer Seitenrichteinheit 112, 212, 312, in welcher die durch die Breite der Kollektionen definierte Position der Seitenrichtelemente eingestellt werden muss (Figur 6, 7 und 8);
- einer Positionierungseinrichtung 150, 250, 350, in welcher die durch die Länge der Kollektionen definierte Lage der Richtnocken eingestellt werden muss (Figur 6, 7 und 8);
- einer Folienzuführeinheit 143 der Verpackungseinrichtung 140, in welcher der durch die Breite und Höhe der Kollektionen 114 definierte Umlegevorgang zum Umlegen der Verpackungsmaterial-Bahn eingestellt werden muss (Figur 7);
- einer Querschweisseinheit 141, in welcher die durch die Breite der Produkteinheiten definierte Lage der Längsverbindung sowie die durch die Länge der Kollektionen 114 definierten Abstände und Lage der Querverbindungen und der Trennstellen eingestellt werden müssen (Figur 7);
- einer Kontroll- und Ausschleuseinrichtung 103, 203, 303, in welcher die von der Breite und Länge der Produkteinheiten 109, 209, 309 abhängige Sensoreinstellung geändert werden muss (Figur 6, 7 und 8);
- einer Stapelbildungsvorrichtung 14, in welcher z. B. der Abstand D1 der Seitenführungen sowie die Distanz D2 der Auflageeinheiten geändert werden müssen (Figur 1, 6, 7 und 8);
- einer Wegfördereinrichtung, in welcher der Abstand zwischen den gebundenen Stapeln trotz veränderlichem Flächenformat der Stapel beibehalten werden muss.

Die vorgenannte Auflistung ist lediglich beispielhaft und soll unabhängig von den in den Figuren offenbarten Ausführungsbeispielen betrachtet werden. Weitere Einrichtungen in der Verarbeitungsanlage, wie Bindestation, können ebenfalls einer Formatumstellung unterworfen sein.

## Patentansprüche

1. Einrichtung (1) mit einer Stapelvorrichtung (2), enthaltend
- einen Stapelschacht (4), welcher einen Stapelbereich (S) ausbildet,
- wenigstens eine Auflageeinheit (7) zur Herstellung von Zusammenstellungen (11) aus Produkteinheiten (9) in Form von Stapeln (11),
wobei die Auflageeinheit (7) eine Auflagefläche für die zu bildenden Stapel ausbildet, und die wenigstens eine Auflageeinheit (7) entlang einer geschlossenen Umlaufbahn einer Umlaufanordnung (31) geführt und so in den Stapelbereich (S) ein- und ausfahrbar ist,
**dadurch gekennzeichnet, dass**
die Stapelvorrichtung (2) wenigstens ein Verstellmittel (25, 26, 27) enthält zur Einstellung und Anpassung der Distanz (D2) zwischen den seitlichen Aussenkanten (56a, 56b) der wenigstens einen Auflageeinheit (7) an veränderte - Flächenformate von nacheinander der Stapelvorrichtung (2) zugeführten Produkteinheiten (9, 109, 209, 309) bei fortgeführtem Förderbetrieb.

2. Einrichtung gemäss Anspruch 1, **dadurch gekennzeichnet, dass** die Stapelvorrichtung (2) eine Seitenbegrenzungseinrichtung (60) mit einem ersten und zweiten, seitlichen Stapelbegrenzungselement (59a, 59b) und ein Verstellmittel (57, 58) zur Einstellung des Abstandes (D1) zwischen den seitlichen Stapelbegrenzungselementen (59a, 59b) enthält.

3. Einrichtung gemäss Anspruch 1, **dadurch gekennzeichnet, dass** die wenigstens eine Auflageeinheit (7) wenigstens zwei nebeneinander oder überlappend angeordnete Auflageelemente (8a, 8b) umfasst.

4. Einrichtung gemäss einem der Ansprüche 1 bis 3, **dadurch gekennzeichnet, dass** der Stapelschacht (4) einen Hauptstapelschacht (5) zur Ausbildung eines Hauptstapels (11) und einen oberhalb des Hauptstapelschachts (5) angeordneten Vorstapelschacht (6) zur Ausbildung eines Vorstapels (10) umfasst, wobei die wenigstens eine Auflageeinheit (7) in den Vorstapelschacht (10) ein- und ausfahrbar ist.

5. Einrichtung gemäss einem der Ansprüche 1 bis 4, **dadurch gekennzeichnet, dass** die Einrichtung (1) eine Zuführvorrichtung (3) zum Zuführen von zu stapelnden Produkteinheiten (9) in einen Stapelbereich (S), insbesondere in den Vorstapelschacht (6) eines Stapelschachtes (4), enthält.

6. Einrichtung gemäss einem der Ansprüche 1 bis 5, **dadurch gekennzeichnet, dass** wenigstens ein Auflageelement (8a, 8b), vorzugsweise sämtliche Auflageelemente (8a, 8b) der wenigstens einen Auflageeinheit (7), entlang seiner Umlaufbahn jeweils mit einem Positionierungsmittel (20a, 20b) in Wirkverbindung steht, derart dass die laterale Position des Auflageelementes (8a, 8b) über das Positionierungsmittel (20a, 20b) einstellbar ist, wobei die Position der Positionierungsmittel (20a, 20b) quer zur Umlaufbahn (U) der Auflageeinheit (7) über Verstellmittel (21) verstellbar ist.

7. Einrichtung gemäss Anspruch 6, **dadurch gekennzeichnet, dass** das Positionierungsmittel (20a, 20b) ein umlaufendes Führungsorgan (22) aufweist, welches als seitliches Begrenzungsmittel für ein an der Auflageeinheit (9) angeordnetes, mit dem Auflageelement (8a, 8b) zusammenwirkendes Führungselement (23a..b) wirkt.

8. Einrichtung gemäss einem der Ansprüche 1 bis 7, **dadurch gekennzeichnet, dass** wenigstens ein Auflageelement (8a, 8b), vorzugsweise sämtliche Auflageelemente (8a, 8b) der Auflageeinheit (7) auf einem Querführungselement (24), vorzugsweise verdrehsicher, angeordnet und gegenüber diesem lateral bzw. axial verschiebbar ist, insbesondere derart angeordnet, dass das wenigstens eine Auflageelement (8a, 8b) über das diesem zugeordneten Positionierungsmittel (20a, 20b) entlang des Querführungselementes (24) verschiebbar ist.

9. Einrichtung gemäss einem der Ansprüche 1 bis 8, **dadurch gekennzeichnet, dass** die wenigstens eine Auflageeinheit (8a, 8b) über Fördermittel (29a, 29b; 30a; 30b), wie Ketten oder Zahnriemen, schlupffrei angetrieben und entlang ihrer Umlaufbahn (U) bewegt wird.

10. Verfahren zum Betreiben einer Verarbeitungsanlage (100, 200, 300), in welcher Produkteinheiten (9, 109, 209, 309) mit unterschiedlichen Flächenformaten verarbeitet werden, enthaltend eine Einrichtung (1, 101, 201, 301) zur Herstellung von Zusammenstellungen (11) nach einem der Ansprüche 1 bis 9, sowie Fördermittel (102, 202, 302) zum Fördern der Produkteinheiten (9, 109, 209, 309) in der Verarbeitungsanlage (100, 200, 300), ferner enthaltend eine Steuerungseinrichtung (110, 210, 310) zur Steuerung der Einrichtung (1, 101, 201,301)
**dadurch gekennzeichnet, dass**
die Verarbeitungsanlage (100, 200, 300) Verstellmittel (20a, 20b, 21) enthält, über welche die Distanz (D2) zwischen den seitlichen Aussenkanten (56a, 56b) der wenigstens einen Auflageeinheit (7) verändert und an das geänderte Flächenformat einer nachfolgenden Produkteinheit bei fortgeführtem Förderbetrieb angepasst wird, und die Verstellmittel (20a, 20b, 21) über die Steuerungseinrichtung (110, 210, 310) derart gesteuert werden, dass die Anpassung der Distanz (D2) zwischen den seitlichen Aussenkanten (56a, 56b) der wenigstens einen Auflageeinheit (7) in einem Zeitraum von unmittelbar vor, während oder unmittelbar nach dem Durchlaufen einer letzten Produkteinheit mit einem ersten Flächenformat und unmittelbar vor, während oder unmittelbar nach dem Durchlaufen einer nachfolgend ersten Produkteinheit mit einem zweiten Flächenformat durch die Einrichtung (1, 101, 201, 301) erfolgt.

11. Verfahren gemäss Anspruch 10, **dadurch gekennzeichnet, dass** die erste Produkteinheit eines nachfolgenden Produktstroms (108, 208, 209) im Vergleich mit dem Produktabstand innerhalb dieses nachfolgenden und/oder des vorausgehenden Produktstroms denselben Abstand oder einen abweichenden bzw. grösseren Abstand zu einer voraus laufenden, letzten Produkteinheit eines vorangehenden Produktstroms mit anderen Produkteigenschaften ausbildet.

12. Verfahren gemäss einem der Ansprüche 10 bis 11, **dadurch gekennzeichnet, dass** die Anpassung der Distanz (D2) zwischen den seitlichen Aussenkanten (56a, 56b) der wenigstens einen Auflageeinheit (7) an veränderte Flächenformate von nacheinander der Einrichtung zugeführten Produkteinheiten (9, 109, 209, 309) bei lückenlosem Förderbetrieb erfolgt.

13. Verfahren gemäss Anspruch 10 oder 12 **dadurch gekennzeichnet, dass** bei einem Wechsel des Flächenformates der zu stapelnden, Produkteinheiten (9, 109, 209, 309) über die Steuerungseinrichtung (110, 210, 310) der Abstand (D1) zwischen zwei seitlichen Stapelbegrenzungselementen (59a, 59b) über die Verstellmittel (20a, 20b, 21) verändert und an das geänderte Flächenformat der nachfolgenden Produkteinheiten angepasst wird.

14. Verfahren gemäss einem der Ansprüche 10 bis 13, **dadurch gekennzeichnet, dass** der Steuerungseinrichtung (110, 210, 310) vor der Umstellung, insbesondere vor der Einstellung des Abstandes (D1) und/oder der Distanz (D2), Informationen über die Produkteigenschaften, insbesondere die Flächenformate der zu verarbeitenden Produkteinheiten (9, 109, 209, 309) oder deren Produkte, übermittelt werden.

15. Verfahren gemäss einem der Ansprüche 10 bis 14, **dadurch gekennzeichnet, dass** die Produkte bzw. Produkteinheiten wenigstens bereichsweise getaktet durch die Verarbeitungsanlage (100, 200, 300) gefördert werden, und eine zentrale Steuerungseinrichtung (110, 210, 310) den einzelnen Takten ein Datenpaket zuordnet, welches ebenfalls getaktet durch die Verarbeitungsanlage zu einer Steuerungseinheit der wenigstens einen Verarbeitungseinrichtung (1, 101, 201, 301) geführt wird, und das Datenpaket auf Produkteigenschaften basierende Steuerdaten bzw. Informationen enthält, und die Steuerungseinheit die Steuerdaten bzw. Informationen des Datenpakets zur Umstellung einer Einflussgrösse, insbesondere einer Bauteilanordnung, auf die geänderten Produkteigenschaften verwendet.

16. Verfahren gemäss einem der Ansprüche 10 bis 15, **dadurch gekennzeichnet, dass** während der Einstellung des Abstandes (D2)zwischen den seitlichen Aussenkanten (56a, 56b) der wenigstens einen Auflageeinheit (7) die Fördergeschwindigkeit gegenüber der Sollgeschwindigkeit vor und nach der Umstellung verändert, insbesondere reduziert, oder die Fördergeschwindigkeit beibehalten wird.

## Claims

1. An arrangement (1) with a stacking device (2), comprising:
- a stacking shaft (4) which forms a stacking region (S),
- at least one support unit (7) for manufacturing compositions (11) of product units (9) in the form of stacks (11),
wherein the support unit (7) forms a support surface for the stacks to be formed, and the at least one support unit (7) is led along a closed circulatory path of a circulatory arrangement (31), and by way of this can be moved into and out of the stacking region (S).
**characterised in that**
the stacking device (2) comprises at least one adjustment means (25, 26, 27) for setting and adaption of the distance (D2) between the lateral outer edges (56a, 56b) of the at least one support unit (7) to changed size formats of product units (9, 109, 209, 309) which are fed successively to the stacking device (2) with a continued conveying operation.

2. An arrangement according to claim 1, **characterised in that** the stacking device (2) comprises a side limitation device (60) with a first and second, lateral stack limitation element (59a, 59b), and an adjustment means (57, 58) for setting the distance (D1) between the lateral stack limitation elements (59a, 59b).

3. An arrangement according to claim 1, **characterised in that** the at least one support unit (7) comprises at least two support elements (8a, 8b) which are arranged next to one another or in an overlapping manner.

4. An arrangement according to one of the claims 1 to 3, **characterised in that** the stacking shaft (4) comprises a main stacking shaft (5) for forming a main stack (11) and a preliminary stacking shaft (6) arranged above the main stacking shaft (5), for forming a preliminary stack (10), wherein the at least one support unit (7) can be moved into and out of the preliminary stacking shaft (10).

5. An arrangement according to one of the claims 1 to 4, **characterised in that** the device (1) comprises a feed device (3) for feeding product units (9) to be stacked into a stacking region (S), in particular into the preliminary stacking shaft (6) of a stacking shaft (4).

6. An arrangement according to one of the claims 1 to 5, **characterised in that** at least one support element (8a, 8b), preferably all support elements (8a, 8b) of the at least one support unit (7), along its circulatory path is actively connected in each case to a positioning means (20a, 20b) in a manner such that the lateral position of the support element (8b,a, 8b) can be set via the positioning means (20a, 20b), wherein the position of the positioning means (20a, 20b) can be adjusted transversely to the circulatory path (U) of the support unit (7) via adjustment means (21).

7. An arrangement according to claim 6, **characterised in that** the positioning means (20a, 20b) comprises a circulatory guide member (22) which acts as a lateral limitation means for a guide element (23a..b) arranged on the support unit (9) and cooperating with the support element (8a, 8b).

8. An arrangement according to one of the claims 1 to 7, **characterised in that** at least one support element (88a, 8b), preferably all support elements (8a, 8b) of the support unit (7) are arranged on a transverse guide element (24), preferably in a rotationally secured manner, and is laterally or axially displaceable with respect to this, in particular arranged in a manner such that the at least one support element (8a, 8b) is displaceable via the positioning means (20a, 20b) assigned to this element, along the transverse guide element (24).

9. An arrangement according to one of the claims 1 to 8, **characterised in that** the at least one support unit (8a, 8b) is driven in a slip-free manner via conveying means (29a, 29b; 30a, 30b) such as chains or toothed belts, and moved along their circulatory path (U).

10. A method for operating a processing installation (100, 200, 300), in which product units (9, 109, 209, 309) with different size formats are processed, comprising an arrangement (1, 101, 201, 301) for manufacturing compositions (11) of product units (9) according to one of the claims 1 to 9, as well as conveying means (102, 202, 302) for conveying the product units (9, 109, 209, 309) in the processing installation (100, 200, 300), further comprising a control device (110, 210, 310) for the control of the arrangement (1, 101, 201, 301),
**characterised in that**
the processing installation (100, 200, 300) comprises adjustment means (20a, 20b, 21) via which the distance (D2) between the lateral outer edges (56a, 56b) of the at least one support unit (7) is changed and adapted to the changed size format of a subsequent product unit with a continued conveying operation, and the adjustment means (20a, 20b, 21) is controlled via the control device (110, 210, 310) in a manner such that the adaptation of the distance (D2) between the lateral outer edges (56a, 56b) of the at least one support unit (7) is effected in a time period directly before, during or directly after the running of a last product unit with a first size format and directly before, during or directly after the running of a subsequent first product unit with a second size format through the arrangement (1, 101, 201, 301).

11. A method according to claim 10, **characterised in that** the first product unit of a subsequent product stream (108, 208, 209) in comparison to the product distance within this subsequent and/or the preceding product stream forms the same distance or a different or larger distance to a preceding last product unit of a preceding product stream with other product characteristics.

12. A method according to one of the claims 10 to 11, **characterised in that** the the adaption of the distance (D2) between the lateral outer edges (56a, 56b) of the at least one support unit (7) to changed size formats of product units (9, 109, 209, 309) fed one after the other to the arrangement occurs with gapless conveying operation.

13. A method according to claim 10 or 12, **characterised in that** with a change of the size format of the product units (9, 109, 209, 309) to be stacked, via the control device (110, 210, 310), the distance (D1) between two lateral stack limitation elements (59a, 59b) is changed via the adjustment means (20a, 20b, 21) and is adapted to the changed size format of the subsequent product units.

14. A method according to one of the claims 10 to 13, **characterised in that** the information with regard to the product characteristics, in particular the size formats of the product units (9, 109, 209, 309) to be processed or their products, is transmitted to the control device (110, 210, 310) before the resetting, in particular before the setting of the distance (D1) and/or the distance (D2).

15. A method according to one of the claims 10 to 14, **characterised in that** the products or product units at least in regions are conveyed through the processing installation (100, 200, 300) in a cycled manner, and a central control device (110, 210, 310) assigns to each cycle a data package which is led in a likewise cycled manner through the processing installation to a control unit of the at least one processing arrangement (1, 101, 201, 301), and the data package contains control data or information which is based on product characteristics, and the control unit uses the control data or information of the data package for resetting an influence variable, in particular of a component arrangement, to the changed product characteristics.

16. A method according to one of the claims 10 to 15, **characterised in that** during the setting of the distance (D2) between the lateral outer edges (56a, 56b) of the at least one support unit (7), the conveying speed is changed, in particular reduced, with respect to the nominal speed, before and after the resetting, or the conveying speed is retained.

## Revendications

1. Appareil (1) muni d'un dispositif d'empilement (2), comprenant
- un puits d'empilement (4) qui forme une zone d'empilement (S),
- au moins une unité de dépose (7) destinée à produire des compositions (11) d'unités de produit (9) sous la forme de piles (11),
l'unité de dépose (7) formant une surface de dépose pour la pile à former et l'au moins une unité de dépose (7) étant guidée le long d'une trajectoire de circulation fermée d'un arrangement de circulation (31) et peut ainsi être rentrée dans la zone d'empilement (S) et en être sortie,
**caractérisé en ce que**
le dispositif d'empilement (2) contient au moins un moyen de déplacement (25, 26, 27) destiné à régler et à adapter la distance (D2) entre les bords extérieurs latéraux (56a, 56b) de l'au moins une unité de dépose (7) aux formats de surface variables des unités de produit (9, 109, 209, 309) acheminées les unes après les autres au dispositif d'empilement (2) en régime de convoyage continu.

2. Appareil selon la revendication 1, **caractérisé en ce que** le dispositif d'empilement (2) contient un appareil de délimitation latérale (60) pourvu d'un premier et d'un deuxième élément de délimitation d'empilement latéral (59a, 59b) et d'un moyen de positionnement (57, 58) destiné à régler l'écart (D1) entre les éléments de délimitation d'empilement latéraux (59a, 59b).

3. Appareil selon la revendication 1, **caractérisé en ce que** l'au moins une unité de dépose (7) comprend au moins deux éléments de dépose (8a, 8b) disposés l'un à côté de l'autre ou en se chevauchant.

4. Appareil selon l'une des revendications 1 à 3, **caractérisé en ce que** le puits d'empilement (4) comprend un puits d'empilement principal (5) destiné à former une pile principale (11) et un puits de pré-empilement (6) disposé au-dessus du puits d'empilement principal (5) et destiné à former une pré-pile (10), l'au moins une unité de dépose (7) pouvant entrer dans le puits de pré-empilement (10) et en sortir.

5. Appareil selon l'une des revendications 1 à 4, **caractérisé en ce que** l'appareil (1) contient un dispositif d'amenée (3) destinée à acheminer des unités de produit (9) à empiler dans une zone d'empilement (S), notamment dans le puits de pré-empilement (6) d'un puits d'empilement (4).

6. Appareil selon l'une des revendications 1 à 5, **caractérisé en ce qu'**au moins un élément de dépose (8a, 8b), de préférence tous les éléments de dépose (8a, 8b) de l'au moins une unité de dépose (7), se trouve en liaison fonctionnelle le long de sa trajectoire de circulation respectivement avec un moyen de positionnement (20a, 20b) de telle sorte que la position latérale de l'élément de dépose (8a, 8b) peut être réglée par le biais du moyen de positionnement (20a, 20b), la position du moyen de positionnement (20a, 20b) étant réglable par le biais de moyens de déplacement (21) transversalement à la trajectoire de circulation (U) de l'unité de dépose (7).

7. Appareil selon la revendication 6, **caractérisé en ce que** le moyen de positionnement (20a, 20b) possède un organe de guidage (22) circulaire qui sert de moyen de délimitation latéral pour un élément de guidage (23a.. b) disposé sur l'unité de dépose (9) et coopérant avec l'élément de dépose (8a, 8b).

8. Appareil selon l'une des revendications 1 à 7, **caractérisé en ce qu'**au moins un élément de dépose (8a, 8b), de préférence tous les éléments de dépose (8a, 8b) de l'unité de dépose (7) sont montés sur un élément de guidage transversal (24), de préférence solidaires en rotation, et peuvent coulisser latéralement ou axialement par rapport à celui-ci, notamment disposés de telle sorte qu'au moins un élément de dépose (8a, 8b) peut coulisser le long de l'élément de guidage transversal (24) par le biais du moyen de positionnement (20a, 20b) qui lui est associé.

9. Appareil selon l'une des revendications 1 à 8, **caractérisé en ce qu'**au moins une unité de dépose (8a, 8b) est entraînée sans patinage par le biais de moyens de convoyage (29a, 29b ; 30a ; 30b), tels que des chaînes ou des courroies crantées, et est déplacée le long de sa trajectoire circulaire (U).

10. Procédé pour faire fonctionner une installation d'usinage (100, 200, 300) dans laquelle sont usinées des unités de produit (9, 109, 209, 309) ayant différents formats de surface, contenant un appareil (1, 101, 201, 301) destiné à produire des compositions (11) selon l'une des revendications 1 à 9 ainsi que des moyens de convoyage (102, 202, 302) destinés à convoyer les unités de produit (9, 109, 209, 309) dans l'installation d'usinage (100, 200, 300), contenant en outre un appareil de commande (110, 210, 310) destiné à commander l'appareil (1, 101, 201, 301),
**caractérisé en ce que**
l'installation d'usinage (100, 200, 300) contient des moyens de déplacement (20a, 20b, 21) par le biais desquels la distance (D2) entre les bords extérieurs latéraux (56a, 56b) de l'au moins une unité de dépose (7) est modifiée et adaptée au format de surface modifié d'une unité de produit suivante lors d'un régime de convoyage continu, et les moyens de déplacement (20a, 20b, 21) sont commandés par le biais de l'appareil de commande (110, 210, 310) de telle sorte que l'adaptation de la distance (D2) entre les bords extérieurs latéraux (56a, 56b) de l'au moins une unité de dépose (7) a lieu dans une période immédiatement avant, pendant ou immédiatement après le passage d'une dernière unité de produit ayant un premier format de surface et immédiatement avant, pendant ou immédiatement après le passage d'une première unité de produit suivante ayant un deuxième format de surface à travers l'appareil (1, 101, 201, 301).

11. Procédé selon la revendication 10, **caractérisé en ce que** la première unité de produit d'un flux de produits suivant (108, 208, 209), en comparaison avec l'écart entre les produits à l'intérieur de ce flux de produits qui suit et/ou qui précède celui-ci forme le même écart ou un écart différent ou plus grand par rapport à une dernière unité de produit, se trouvant à l'avant, d'un flux de produit précédent ayant d'autres caractéristiques de produit.

12. Procédé selon l'une des revendications 10 à 11, **caractérisé en ce que** l'adaptation de la distance (D2) entre les bords extérieurs latéraux (56a, 56b) de l'au moins une unité de dépose (7) aux formats de surface modifiés des unités de produit (9, 109, 209, 309) acheminées les unes après les autres à l'appareil s'effectue lors d'un régime de convoyage sans intervalle.

13. Procédé selon la revendication 10 ou 12, **caractérisé en ce que** lors d'un changement du format de surface des unités de produit (9, 109, 209, 309) à empiler par le biais de l'appareil de commande (110, 210, 310), l'écart (D1) entre deux éléments de délimitation d'empilement latéraux (59a, 59b) est modifié par le biais des moyens de déplacement (20a, 20b, 21) et adapté au format de surface modifié des unités de produit suivantes.

14. Procédé selon l'une des revendications 10 à 13, **caractérisé en ce que** des informations sur les caractéristiques du produit, notamment les formats de surface des unités de produit (9, 109, 209, 309) à usiner ou de leurs produits, sont communiquées à l'appareil de commande (110, 210, 310) avant le changement de réglage, notamment avant le réglage de l'écart (D1) et/ou de la distance (D2).

15. Procédé selon l'une des revendications 10 à 14, **caractérisé en ce que** les produits ou les unités de produit sont transportées à travers l'installation d'usinage (100, 200, 300) de manière cyclique au moins dans certaines zones, et un appareil de commande (110, 210, 310) central associe à chaque cycle un paquet de données qui est lui aussi amené de manière cyclique à travers l'installation d'usinage à une unité de commande de l'au moins un appareil d'usinage (1, 101, 201, 301), et le paquet de données contient des données de commande ou des informations qui se basent sur les caractéristiques du produit, et l'unité de commande utilise les données de commande ou les informations du paquet de données pour le changement de réglage d'une grandeur influente, notamment d'un arrangement de composants, en fonction des caractéristiques modifiées du produit.

16. Procédé selon l'une des revendications 10 à 15, **caractérisé en ce que** pendant le réglage de l'écart (D2) entre les bords extérieurs latéraux (56a, 56b) de l'au moins une unité de dépose (7), la vitesse de convoyage est modifiée, notamment réduite par rapport à la vitesse de consigne avant et après le changement de réglage, ou alors la vitesse de convoyage est conservée.
